# EUROPÄISCHE PATENTSCHRIFT

(11) **EP 2 097 722 B1**
(45) Veröffentlichungstag und Bekanntmachung des Hinweises auf die Patenterteilung: **10.01.2018**
(21) Anmeldenummer: 07819531.0
(22) Anmeldetag: 02.11.2007
(51) Int. Cl.: G01F 11/28, B67C 3/20

(54) **VORRICHTUNG UND VERFAHREN ZUM DOSIERTEN ABFÜLLEN VON MEDIEN**
DEVICE AND METHOD FOR METERING MEDIA
DISPOSITIF ET PROCÉDÉ PERMETTANT DE TRANSVASER DES MILIEUX DE MANIÈRE DOSÉE

(30) Priorität: 21.11.2006 DE 102006054606
(43) Veröffentlichungstag der Anmeldung: 09.09.2009
(73) Patentinhaber: Sartorius Stedim Biotech GmbH, 37079 Göttingen (DE)
(72) Erfinder: MENNENGA, Heyo, 18119 Rostock-Diedrichshagen (DE)
(86) Internationale Anmeldenummer: PCT/EP2007/009504
(87) Internationale Veröffentlichungsnummer: WO 2008/061614

(56) Entgegenhaltungen:
- DE-A1- 2 713 525
- DE-A1- 3 245 594
- FR-A- 1 534 009
- US-A- 1 657 792
- US-A- 5 224 526

## Beschreibung

Die Erfindung betrifft eine Vorrichtung und ein Verfahren zum dosierten Abfüllen von Medien, insbesondere zum sterilen Abfüllen in nicht steriler Umgebung.

In der pharmazeutischen Industrie werden Vorrichtungen zum dosierten Abfüllen eines Volumens einer Flüssigkeit (z.B. eines Pharmakons) in mehrere Behältnisse (z.B. Probengefäße) nach dem Abfüllen eines vorgegebenen Gesamtvolumens und dessen Aufteilung in definierte Einzelvolumina in der Regel entsorgt. Derartige Abfüllvorrichtungen gehören zu den Einweg-Artikeln, wie sie bei der Verarbeitung von Stoffen mit sehr hohen Anforderungen an Reinheit und Sterilität und/oder bei der Verarbeitung von hochaktiven Substanzen Anwendung finden.

Derartige Abfüllvorrichtungen werden vorzugsweise aus flexiblen Komponenten (Beuteln, Schläuchen) zusammengestellt, die zumindest vor dem Gebrauch ein geschlossenes System bilden und die vor Gebrauch sterilisiert worden sind. Das abzufüllende Produkt wird nur von sauberen, sterilen Innenflächen der flexiblen Komponenten berührt. Diese flexiblen Komponenten werden bei der Nutzung durch feste, wiederholt genutzte, außen an den flexiblen Komponenten angreifende und damit nicht das Produkt kontaminierende Elemente wie Ventile, Sensoren, Halterungen, Steuerungen ergänzt. Nach dem Gebrauch werden die flexiblen Komponenten entsorgt, die festen werden für die nächste Abfüllung genutzt.

Die Vorteile derartiger Systeme bestehen darin, dass die Arbeitsschritte für das Reinigen und das Sterilisieren beim Hersteller der Systeme während der Fertigung erfolgen und so beim Nutzer der Systeme samt den zugehörigen, aufwendigen und teuren Validierungsprozessen entfallen.

Bei derartigen Systemen werden zudem keine Partikel aus der Abfüllvorrichtung in die abzufüllende Flüssigkeit abgegeben, weil keine Partikel erzeugende Reibung durch bewegliche Teile der Abfüllvorrichtung auftritt. Bei der Verarbeitung hochaktiver Substanzen (z.B. Zytostatika) ist neben dem Vorteil des geschlossenen Systems vorteilhaft, dass keine Reinigung erforderlich ist. Die Gefahr von Verschleppungen und Kreuzkontaminationen ist bei diesen Systemen ausgeschlossen. FR1534009 offenbart eine Vorrichtung zum dosierten Abfüllen von Medien umfassend einen Vorratsbehälter für die abzufüllenden Medien mit einer im unteren Teil des Vorratsbehälters befindlichen, unteren und einer im oberen Teil des Vorratsbehälters befindlichen oberen Öffnung, wobei die untere Öffnung mit dem Vorrat an abzufüllenden Medien in kommunizierender Verbindung steht; einen mit einem absperrbaren Auslauf für die abzufüllenden Medien versehenen Maßbehälter, der mit einer oberen Öffnung und mit einer dazu weiter unten liegenden, das Maß definierenden, unteren Öffnung ausgestattet ist; eine erste kommunizierende Verbindung zwischen den unteren Öffnungen des Vorrats- und Maßbehälters; eine zweite kommunizierende Verbindung zwischen den oberen Öffnungen des Vorrats- und Maßbehälters, wobei die Vorrichtung gestaltet ist, ein vorgegebenes Volumen der abzufüllenden Medien, welches dem Raum zwischen der unteren Öffnung des mindestens einen Maßbehälters und dem absperrbaren Auslauf entspricht, über den absperrbaren Auslauf in mindestens einen Zielbehälter zu überführen.

US 5,090,594 offenbart eine Abfüllvorrichtung, die einen in einer Fluidkammer angeordneten, oben offenen Meßbecher bekannten Volumens aufweist. Das abzufüllende Fluid wird in den Meßbecher durch das Füllen der Fluidkammer bis zu einer Höhe über dem oberen, offenen Ende des Meßbechers gefüllt. Die Fluidkammer wird nachfolgend soweit entleert, bis die Fluidhöhe unter das obere Ende des Meßbechers abfällt. Ein Volumen des Fluids, das dem Meßbechervolumen entspricht, wird in einen Auffangbehälter, der durch eine Ablaßleitung mit dem Meßbecher verbunden ist, abgegeben.

EP 0 745 832 B1 offenbart eine Abfüllvorrichtung, bei welcher durch füllstandsüberwachtes und ventilgesteuertes Füllen und Entleeren eines senkrechten, durchsichtigen Rohr- oder Schlauchabschnittes Teilvolumina aus einem Gesamtvolumen gebildet werden. Das untere Ende des Dosierrohres ist über zwei Ventile wahlweise mit dem Gesamtvolumen der Flüssigkeit in einem Beutel oder mit dem Auslauf des Dosierrohres verbunden. Das obere Ende des Dosierrohres ist verbunden mit dem Luftvolumen im Beutel oberhalb des Gesamtvolumens der Flüssigkeit.

Beim Füllen bis zu einem durch einen Sensor erkannten Höchstfüllstand im Rohr besteht eine Verbindung des Rohres zum Vorrat an abzufüllender Flüssigkeit. Beim Entleeren wird diese Verbindung geschlossen und nach Öffnen eines Auslaufventils läuft die Flüssigkeit bis zu einem detektierten Tiefststand in dem Rohr- oder Schlauchabschnitt in den zu füllenden Behälter. Als Sensoren sind Lichtschranken eingesetzt, die die Dosier- und Förderschläuche durchstrahlen und so das Niveau der Flüssigkeit erkennen, die den Strahl beeinflusst. Das Füllvolumen ist durch den Rohrdurchmesser und die Differenz der Höhen des detektierten Höchst- und des Tiefststandes des Flüssigkeitsspiegels bestimmt. Für eine Abfüllvorrichtung sind mindestens zwei Sensoren und zwei Ventile erforderlich. Sowohl an die Sensoren wie auch an die Ventile werden hohe zeitliche Anforderungen gestellt, sie müssen schnell sein und zeitlich stabil arbeiten. Der Abgleich des Füllvolumens erfolgt durch Verschieben der Lichtschranke für eines der Niveaus auf dem Dosierrohr.

US 7,104,422 B2 offenbart eine Einweg-Abfüllvorrichtung, die sich von der Abfüllvorrichtung der EP 0 745 832 B1 dadurch unterscheidet, daß sich ein Teil des Dosierrohres zwischen den zwei Kupferplatten eines elektrischen, stromdurchflossenen Kondensators befindet. Der Abfüllvorgang wird elektronisch gesteuert in Abhängigkeit von der sich ändernden elektrischen Kapazität des Kondensators als Funktion des Füllstands des Fluids zwischen den Kondensatorplatten. Eine Ausführungsform, bei welcher sich eine der Kupferplatten direkt im Dosierrohr befindet, erhöht die Kontaminationsgefahr für das Fluid und erhöht die Herstellungskosten der als EinwegArtikel konzipierten Abfüllvorrichtung.

Nachteilig bei den genannten Vorrichtungen ist der relativ hohe Kosten verursachende apparative Aufwand und die Gefahr von Kontaminationen beim Abfüllen. So verläuft der Weg von dem Auslauf der Abfüllvorrichtung in das zu füllende Gefäß im nichtsterilen Raum. Somit ist bei einer geforderten sterilen Abfüllung die Umgebung vom Auslauf aus der Abfüllvorrichtung bis zum Eintritt in das Gefäß steril und partikelfrei zu halten, was zusätzlichen hohen Aufwand erfordert.

Der Erfindung liegt deshalb die Aufgabe zu Grunde, eine Vorrichtung zum dosierten Abfüllen von Medien vorzuschlagen, die sich durch einen geringen apparativen und personellen Aufwand auszeichnet, als Einwegvorrichtung geeignet und zum sterilen Abfüllen von Medien in unsteriler Umgebung verwendbar ist.

Weiterhin ist es Aufgabe der Erfindung, ein Verfahren zum dosierten Abfüllen von Medien unter Verwendung der Vorrichtung vorzuschlagen.

Diese Aufgabe wird gelöst durch eine Vorrichtung gemäß Anspruch 1 und durch ein Verfahren gemäß Anspruch 18. Bevorzugte Weiterbildungen der Erfindung sind durch die Unteransprüche definiert.

Die erfindungsgemäße Vorrichtung weist folgende Komponenten auf:
- mindestens einen Vorratsbehälter für die abzufüllenden Medien mit einer im unteren Teil des Vorratsbehälters befindlichen, unteren und einer im oberen Teil des Vorratsbehälters befindlichen oberen Öffnung, wobei mindestens die untere Öffnung mit dem Vorrat an abzufüllenden Medien in kommunizierender Verbindung steht,
- mindestens einen, mit einem absperrbaren Auslauf für die abzufüllenden Medien versehenen Maßbehälter, der mit einer oberen Öffnung und mit einer dazu weiter unten liegenden, das Maß definierenden, unteren Öffnung ausgestattet ist,
- eine erste kommunizierende Verbindung zwischen den unteren Öffnungen des mindestens einen Vorrats- und Maßbehälters,
- eine zweite kommunizierende Verbindung zwischen den oberen Öffnungen des mindestens einen Vorrats- und Maßbehälters oder eine für die abzufüllenden Medien unpassierbare Verbindung der oberen Öffnungen zur Umwelt.

Die Vorrichtung ermöglicht das Abfüllen von Medien in nicht steriler Umgebung, da erfindungsgemäß für das dosierte Abfüllen keine Sensoren, die über einen Regelkreis mit Abfüllventilen gekoppelt sind, notwendig sind. Hierdurch sind der Meß- und Regelaufwand reduziert. In einer bevorzugten Ausführungsform ist die Vorrichtung als sterilisierbarer Einwegartikel konzipiert, wodurch Kosten und Validierungsaufwand für den Nutzer minimiert sind.

Der Vorratsbehälter ist vor dem ersten Füllvorgang zu einem Teil mit den abzufüllenden Medien gefüllt, zu einem Teil mit Luft. Der Maßbehälter ist vor dem ersten Füllvorgang leer. "Luft" kann durch jedes andere Gas(gemisch) ersetzt sein.

Ferner weist die Vorrichtung weitere Mittel zur Einwirkung mindestens einer Kraft auf die abzufüllenden Medien auf, damit die abzufüllenden Medien zwischen Vorrats- und Maßbehälter kommunizierbar sind. Die Medien sind kommunizierbar durch Krafteinwirkung auf den Vorratsbehälter und/oder auf die erste, kommunizierende und/oder auf die zweite, kommunizierende Verbindung.

In einer bevorzugten Ausführungsform der Vorrichtung sind die Mittel zur Einwirkung mindestens einer Kraft auf die abzufüllenden Medien Mittel zur Erzeugung einer Druckdifferenz zwischen Vorrats- und Maßbehälter. Bei den Mitteln handelt es sich besonders bevorzugt um manuelles oder linearantriebgesteuertes Heben/Senken des Vorratsbehälters. Die mindestens eine Kraft resultiert aus der durch das Heben oder Senken bewirkten Höhendifferenz der Medienspiegel zwischen Vorrats- und Maßbehälter. Diese Varianten der Medienflußerzeugung erlauben ein schnelles, kostengünstiges und einfaches Abfüllen von Medien mit minimiertem apparativen Aufwand.
Die Mittel zur Druckdifferenzerzeugung umfassen in weiteren Ausführungsformen eine Kompression des Vorratsbehälters, die sowohl maschinell als auch manuell möglich ist, oder die Einwirkung von Pumpen auf die erste und/oder zweite kommunizierende Verbindung.

Besonders bevorzugt ist die erste kommunizierende Verbindung eine nach außen dichte Schlauchverbindung, auf die eine Schlauch- und / oder Peristaltikpumpe einwirkt. Weiterhin bevorzugt ist die zweite kommunizierende Verbindung eine nach außen dichte Schlauchverbindung, auf die eine Schlauch- und / oder Peristaltikpumpe einwirkt.

In einer bevorzugten Ausführungsform der Erfindung ist ein vorgegebenes Volumen der abzufüllenden Medien über den absperrbaren Auslauf in mindestens einen Zielbehälter überführbar.

In einer besonders bevorzugten Ausführungsform ist der absperrbare Auslauf in den Maßbehälter integriert. Bevorzugt ist der absperrbare Auslauf durch ein Ventil absperrbar. Besonders bevorzugt befindet sich der absperrbare Auslauf im Boden des Maßbehälters. In dieser Ausführungsform stellt das Ventil ein steuerbares Auslaufventil in Form eines Stempels dar.

Der Maßbehälter ist hierbei über eine nach außen dichte Verbindung mit dem Zielbehälter verbunden. Bei einer bevorzugten Ausführungsform ist die nach außen dichte Verbindung eine Schlauchverbindung, welche besonders bevorzugt aus thermoplastischem Kunststoff besteht. Das Ventil ist in einer weiteren Ausführungsform außerhalb des Maßbehälters vorgesehen und wirkt auf die nach außen dichte Verbindung ein. Besonders bevorzugt ist die nach außen dichte Verbindung eine Schlauchverbindung, welche aus thermoplastischem Kunststoff besteht und das auf die Schlauchverbindung einwirkende Ventil ein Schlauchquetschventil.

Das vorgegebene Volumen im Maßbehälter ist durch Aktivierung des Ventils über die nach außen dichte Verbindung in den Zielbehälter überführbar.
Nach Aufnahme des vorgegebenen Volumens durch den Zielbehälter ist die Schlauchverbindung zwischen dem mindestens einen Maßbehälter und dem mindestens einen Zielbehälter durch thermische und/oder mechanische Einwirkung und/oder durch Verklebung den Maß- und Zielbehälter verschließend durchtrennbar. Unter verschließendem Durchtrennen ist hierbei auch ein Herausziehen von Röhrchen aus einem Septum zu verstehen.

Vorzugsweise ist der Maßbehälter so gestaltet, daß das vorgegebene Volumen der abzufüllenden Medien dem Raum zwischen der unteren Öffnung des Maßbehälters und dem absperrbaren Auslauf entspricht.

Bei der erfindungsgemäßen Vorrichtung sind die Medien und Luft zwischen Vorrats-und Maßbehälter über die erste und zweite Verbindung austauschbar, wobei über die erste Verbindung durch die Einwirkung mindestens einer Kraft dem mindestens einen Maßbehälter die abzufüllenden Medien solange zuführbar sind, bis mindestens die untere Öffnung des Maßbehälters von den abzufüllenden Medien vollständig bedeckt ist und wobei über die erste Verbindung durch die Einwirkung mindestens einer Kraft die abzufüllenden Medien in den mindestens einen Vorratsbehälter solange rückführbar sind, bis die untere Öffnung des Maßbehälters zumindest teilweise nicht mehr von den abzufüllenden Medien bedeckt ist und wobei keine abzufüllenden Medien zwischen dem mindestens einen Vorratsbehälter und dem mindestens einen Maßbehälter austauschbar sind bei einer nur teilweise von den abzufüllenden Medien bedeckten, unteren Öffnung des Maßbehälters. Sind keine Medien zwischen Vorrats- und Maßbehälter austauschbar, befindet sich im Maßbehälter das vorgegebene Volumen an abzufüllenden Medien, welches präzise und reproduzierbar einstellbar ist. Die Abmessung des vorgegebenen Volumens erfordert keine Meß- und Regeleinrichtungen und ist nur durch die Geometrie des Maßbehälters bestimmt.

Die Überführung von den abzufüllenden Medien vom Vorrats- in den Maßbehälter erfolgt durch druckdifferenzerzeugende Krafteinwirkung, bevorzugt durch Heben des mindestens einen Vorratsbehälters, wobei nach erfolgtem Heben der Spiegel der abzufüllenden Medien im mindestens einen Vorratsbehälter höher als die untere Öffnung des mindestens einen Maßbehälters liegt.

Die Rückführung von den abzufüllenden Medien aus dem Maß- in den Vorratsbehälter erfolgt durch eine Krafteinwirkung, durch welche eine Druckdifferenz zwischen Vorrats- und Maßbehälter erzeugbar ist. Besonders bevorzugt ist ein Senken des mindestens einen Vorratsbehälters, wobei nach erfolgtem Senken der Spiegel der abzufüllenden Medien im mindestens einen Vorratsbehälter tiefer als die untere Öffnung des mindestens einen Maßbehälters liegt.
Die Rückführung der Medien aus dem Maßbehälter in den Vorratsbehälter ist hierbei nur solange möglich, bis die untere Öffnung des Maßbehälters zumindest teilweise nicht mehr von den abzufüllenden Medien bedeckt ist und sich das vorgegebene Volumen als Raum zwischen unterer Öffnung des Maßbehälters und Auslauf im Maßbehälter befindet.

In einer bevorzugten Ausführungsform der Vorrichtung ist der mindestens eine Vorratsbehälter und/oder der mindestens eine Maßbehälter und/oder der mindestens eine Zielbehälter ein flexibler Einwegbehälter, so daß neben den minimierten Kosten für Meß- und Regeleinrichtungen die Herstellkosten für Maß-, Ziel- und Vorratsbehälter reduziert sind. Bevorzugt sind Maß-, Ziel- und Vorratsbehälter aus flexiblem Kunststoff gefertigt.

Neben flexiblen Maß-, Ziel- und Vorratsbehältern sind auch Behälter aus einem formbeständigen Mehrwegmaterial einsetzbar. Formbeständige Mehrwegbehälter aus z. B. Glas sind bevorzugt einsetzbar zum dosierten Abfüllen von abzufüllenden Medien, die beim Kontakt mit der Oberfläche von flexiblen Behältern (z. B. Kunststoff) in unerwünschter Weise interagieren.

Der mindestens eine Vorratsbehälter und/oder der mindestens eine Maßbehälter und/oder der mindestens eine Zielbehälter sind bevorzugt sterilisierbar.

In einer weiteren bevorzugten Ausführungsform ist der Abstand der unteren Öffnung des Maßbehälters zum absperrbaren Auslauf und somit der Betrag des vorgegebenen Volumens variabel einstellbar durch eine Höhenverstellung der unteren Öffnung des Maßbehälters. Diese Höhenverstellung der unteren Öffnung des Maßbehälters bietet erfindungsgemäß den Vorteil, daß ohne Meß- und Regeleinrichtungen mit ein und derselben Vorrichtung nacheinander verschiedene vorgegebene Volumina abmeßbar und dosierbar sind, ohne die Sterilitätsgrenze zur Umwelt aufzuheben.

Besonders bevorzugt befindet sich die untere Öffnung bei dieser Ausführungsform in einer flexiblen Wandung des Maßbehälters, wobei der Abstand der unteren Öffnung zum absperrbaren Auslauf durch Einwirkung mindestens einer Kraft variierbar ist. Besonders bevorzugt ist die Einwirkung mindestens einer Kraft eine Druckbeaufschlagung der Wandung.

Bei einer alternativen Ausführungsform ist die untere Öffnung des Maßbehälters ein Rohr in einem teilweise als Faltenbalg gestalteten Deckel des Maßbehälters. Hierbei ist der Abstand der unteren Öffnung zum absperrbaren Auslauf durch Druckbeaufschlagung des Faltenbalges variierbar.

Besonders bevorzugt sind der Maßbehälter und der Zielbehälter identisch. Durch diese Ausführungsform sind die Herstellkosten und der apparative Aufwand für die erfindungsgemäße Vorrichtung zusätzlich reduzierbar.

Bei mit dem Zielbehälter identischen Maßbehälter sind untere und obere Öffnung des Maßbehälters bevorzugt Röhrchen, die durch einen Deckel des mindestens einen Maß- bzw. Zielbehälters einführbar und/oder in den Deckel einklebbar und/oder mit dem Deckel aus einem Stück fertigbar sind, wobei die Beabstandung des Röhrchens, das die untere Öffnung ist, zum Boden geringer ist als die Beabstandung des Röhrchens, das die obere Öffnung ist.

Bei dieser Ausführungsform, ist das vorgegebene Volumen der Raum zwischen dem unteren Ende des Röhrchens, das die untere Öffnung des Maßbehälters ist, und dem Boden des Maß- bzw. Zielbehälters.

Durch Kippen des Maß- bzw. Zielbehälters um einen im Gegenuhrzeigersinn positiven Kippwinkel ist das vorgegebene Volumen im Maß- bzw. Zielbehälter vergrößerbar im Vergleich zu dem vorgegebenen Volumen bei einem Kippwinkel von 0 °. Durch Kippen des Maß- bzw. Zielbehälters um einen im Gegenuhrzeigersinn negativen Kippwinkel ist das vorgegebene Volumen verkleinerbar im Vergleich zu dem vorgegebenen Volumen bei einem Kippwinkel von 0°. Der Drehsinn des Kippwinkels und die damit verbundene Volumenverkleinerung bzw. -vergrößerung sind davon abhängig, auf welcher Seite des Maß- bzw. Zielbehälters sich die untere Öffnung befindet.

Bevorzugt befindet sich das geringer beabstandete Röhrchen mit geringerer lichter Weite koaxial im Innenraum des höher beabstandeten Röhrchens mit größerer lichter Weite.

Besonders bevorzugt sind geringer und höher beabstandetes Röhrchen aus Metall und/ oder Kunststoff gefertigt und/oder stellen einen Doppelschlauch dar.

Die untere Öffnung des Maßbehälters ist in einer weiteren bevorzugten Ausführungsform für Flüssigkeiten durchlässig, während die obere Öffnung des Maßbehälters für Flüssigkeiten undurchlässig ist.
Bevorzugt ist die obere Öffnung ein Röhrchen, dessen unterer Teil aus einem porösen, gasdurchlässigen Material gebildet ist. Besonders bevorzugt ist der untere Teil des Röhrchens ein hydrophober Gasfilter. Der Gasfilter ist ein Füllstandsschalter, der bei Benetzung durch die abzufüllenden Medien weder für die Medien noch für Gas durchlässig ist. Oberhalb des hydrophoben Gasfilters weist das Röhrchen mindestens ein Mittel auf, durch das eine Gaszufuhr bei Benetzung des Gasfilters mit den abzufüllenden Medien möglich ist.

Bevorzugt ist das mindestens eine Mittel ein Rückschlagventil und/oder eine durch Laserschuß einführbare, kapillarenförmige Bohrung in dem im Maß- bzw. Zielbehälter befindlichen Teil des Röhrchens.

Das vorgegebene Volumen ist hierbei durch den Raum zwischen dem Gasfilter und dem Boden des Ziel- bzw. Maßbehälters vorgegeben.

Bei einer weiteren bevorzugten Ausführungsform sind mehrere Maßbehälter und/oder Zielbehälter über mindestens eine erste Verbindung aus dem mindestens einen Vorratsbehälter sukzessiv mit n abzufüllenden Medien befüllbar, wobei n eine ganze positive Zahl größer Eins ist.

In dieser bevorzugten Ausführungsform hat der Vorratsbehälter seinerseits einen Zulauf, welcher bevorzugt ein Sterilkonnektor oder steriler Steckverbinder ist. Über diesen Zulauf sind sukzessiv n abzufüllende Medien in den Vorratsbehälter einfüllbar, die auf beliebig viele Maß- und/oder Zielbehälter in vorgegebenen Volumina aufteilbar sind. In einer besonders bevorzugten Ausführungsform sind die abzufüllenden Medien voneinander verschieden, so daß in den Maß- und/oder Zielbehältern verschiedene abzufüllende Medien mischbar sind.

Weil die erfindungsgemäße Vorrichtung keine Sensoren und Regeleinrichtungen zur Steuerung des Abfüllvorgangs hat, sind Vorrats-, Maß- und Zielbehälter, erste und zweite Verbindung und die nach außen dichte Verbindung zwischen Maß- und Zielbehälter sterilisierbar, besonders bevorzugt als eine Einheit miteinander verbunden vor dem Gebrauch der Vorrichtung.

Bei einer alternativen Ausführungsform ist das vorgegebene Volumen mittels eines Pegelsensors außerhalb des Maßbehälters meßbar, wobei sich der Pegelsensor auf einer Höhe zwischen oberer und unterer Öffnung des Maßbehälters befindet. Der Pegelsensor detektiert die Höhe des Medienspiegels im Maß- bzw. Zielbehälter und ist besonders bevorzugt ein optischer Sensor auf Laserbasis oder ein kapazitiver Sensor. Beim Füllen vieler Maß- bzw. Zielbehälter ist ein Sensor ausreichend, wenn der Sensor oder der in der Abgleichphase bearbeitete Maß- bzw. Zielbehälter so bewegbar sind, dass der Sensor auf den jeweils abzugleichenden Maß- bzw. Zielbehälter wirkt oder sich alle Maß- und Zielbehälter auf einer Höhe befinden und nach dem Prinzip der kommunizierenden Röhren gleichzeitig befüllbar sind. Beim Einsatz eines externen Sensors taucht die untere Öffnung im Maß- bzw. Zielbehälter in die abzufüllenden Medien ein, so dass ein Füllen oder Rückfördern möglich ist. Die Rückförderung ist durch Druckerniedrigung im Vorratsbehälter möglich. Der angestrebte Medienspiegel im Maß- bzw. Zielbehälter befindet sich zwischen unterer und oberer Öffnung. Bei dem Einsatz eines externen Sensors ist das vorgegebene Volumen durch die Höhe des Sensors einstellbar.

Das erfindungsgemäße Verfahren unter Verwendung der erfindungsgemäßen Vorrichtung umfaßt die folgenden Schritte:
A) Erzeugen eines Flusses an abzufüllenden Medien aus dem Vorratsbehälter in den Maßbehälter, bis mindestens die untere Öffnung des Maßbehälters vollständig von abzufüllenden Medien bedeckt wird,
B) Erzeugen eines Flusses an abzufüllenden Medien aus dem Maßbehälter in den Vorratsbehälter, bis die untere Öffnung des Maßbehälters zumindest teilweise nicht mehr von abzufüllenden Medien bedeckt wird und sich ein vorgegebenes Volumen an abzufüllenden Medien im Maßbehälter befindet,
C) Öffnen des absperrbaren Auslaufs und
D) Überführen des vorgebenen Volumens an Medien aus dem Maßbehälter in den mindestens einen Zielbehälter,
wobei die Schritte A) und B) durch Krafteinwirkung auf die abzufüllenden Medien erfolgen, wobei die Schritte A) - D) in n Zyklen durchgeführt werden und wobei n eine ganze positive Zahl größer gleich Eins ist. Besonders bevorzugt erzeugt die Krafteinwirkung in den Schritten A) und B) eine Druckdifferenz zwischen Vorrats- und Maßbehälter.

In einer bevorzugten Ausführungsform entfallen die Schritte C) und D) bei identischem Maß- und der Zielbehälter.

Besonders bevorzugt erzeugt die Krafteinwirkung in den Schritten A) und B) eine Druckdifferenz zwischen dem Vorrats- und dem Maßbehälter.

In einer bevorzugten Ausführungsform des Verfahrens wird nach Schritt D) des n-ten Zyklus die Schlauchverbindung zwischen Maß- und Zielbehälter durch thermische und/oder mechanische Einwirkung und/oder durch Verklebung den Maßbehälter und den Zielbehälter verschließend durchtrennt.

In einer weiteren bevorzugten Ausführungsform, bei welcher der Maßbehälter mit dem Zielbehälter identisch ist, wird nach Schritt B) des n-ten Zyklus die erste Verbindung zwischen Vorratsbehälter und Maß- bzw. Zielbehälter durch thermische und/oder mechanische Einwirkung und/oder durch Verklebung den Maß- bzw. Zielbehälter verschließend durchtrennt.

Das erfindungsgemäße Verfahren ermöglicht das dosierte und sterile Abfüllen von Medien in nicht steriler Umgebung. Da das vorgegebene Volumen der abzufüllenden Medien mit hoher Präzision durch die Geometrie des Maßbehälters bestimmt ist, sind Sensoren zur Füllstandskontrolle und Volumendosierung während der Schritte A) bis D) nicht erforderlich. Weiterhin ist der apparative Aufwand für die Erzeugung des Medienflusses zwischen Vorrats- und Maßbehälter minimiert, da für den Medienfluß in der bevorzugten Ausführungsform des Verfahrens keine Pumpen erforderlich sind.
Vor Ablauf von Schritt A) enthält der Vorratsbehälter die abzufüllenden Medien, die in kommunizierender Verbindung mit seiner unteren Öffnung stehen, und Luft, die in kommunizierender Verbindung mit seiner oberen Öffnung steht. Luft kann hierbei durch jedes andere Gas ersetzt sein.

In Schritt A) werden durch Heben des Vorratsbehälters die abzufüllenden Medien vom Vorratsbehälter in den Maßbehälter überführt, wobei nach dem Heben der Medienspiegel im Vorratsbehälter über der unteren Öffnung des Maßbehälters liegt.
Ist nach Schritt A) der Medienspiegel im Maßbehälter höher als das Niveau der unteren Öffnung des Maßbehälters, werden die abzufüllenden Medien in Schritt B) durch Senken des Vorratsbehälters aus dem Maß- in den Vorratsbehälter zurückgeführt, wobei nach dem Senken der Medienspiegel im Vorratsbehälter unter der unteren Öffnung des Maßbehälters liegt. Die Rückführung der Medien erfolgt solange, bis die untere Öffnung des Maßbehälters zumindest teilweise nicht mehr von Medien bedeckt ist. Im Maßbehälter befindet sich ein vorgegebenes Volumen, das dem Raum zwischen der unteren Öffnung des Maßbehälters und dem absperrbaren Auslauf entspricht.
In Schritt C) wird der absperrbare Auslauf geöffnet. In Schritt D) werden die abzufüllenden Medien über die nach außen dichte Verbindung in den Zielbehälter überführt.

Durch zyklische Wiederholung der Schritte A)-D) (n ≥ 1) können erfindungsgemäß mehrere, verschiedene Medien in vorgegebenen Volumina in den mindestens einen Zielbehälter überführt werden, was einem sterilen Mischen der Medien entspricht. In einer weiteren Ausführungsform wird nur ein Abfüllzyklus (n = 1) durchgeführt. Unabhängig von der Zahl der Zyklen wird nach Schritt D) der Zielbehälter durch Durchtrennen der nach außen dichten Verbindung vom Maßbehälter steril getrennt und steril verschlossen. In einer weiteren Ausführungsform des Verfahrens wird unabhängig von der Zahl der Zyklen nach Schritt B) der Zielbehälter, der gleichzeitig Maßbehälter ist, durch Durchtrennen der ersten Verbindung steril vom Vorratsbehälter getrennt und steril verschlossen.
Bei einer nach außen dichten Schlauchverbindung bzw. bei einer ersten Verbindung, die bevorzugt als thermoplastische Schlauchverbindungen gefertigt sind, werden diese durch thermische und / oder mechanische Einwirkung und / oder Kleben, besonders bevorzugt durch Quetschschweißen oder durch Setzen von Metallklammern nach Entleeren der Schläuche mit einer Rollerzange, durchtrennt.

Die erfindungsgemäße Vorrichtung und das erfindungsgemäße Verfahren sollen anhand der nachfolgenden Figuren 1-10 erläutert werden.
Dabei zeigen die
Figuren 1a bis 1d: die erfindungsgemäße Vorrichtung in vier Abfüllzuständen,
die Figuren 2a bis 2c: einen Maßbehälter mit integriertem, absperrbaren Auslauf,
die Figuren 3a und 3b: einen Maß- und Zielbehälter mit steriler Verbindung,
die Figuren 4a und 4b: einen Ziel- bzw. Maßbehälter mit einer Doppelleitung als untere bzw. obere Öffnung,
die Figuren 5a bis 5f: einen Ziel- bzw. Maßbehälter, dessen obere Öffnung einen hydrophoben Gasfilter und ein Rückschlagventil hat,
die Figuren 6a bis 6e: einen Ziel- bzw. Maßbehälter, der kippbar ist,
die Figur 7: einen Maßbehälter, dessen untere Öffnung höhenvariierbar ist,
die Figur 8: einen Vorrats- und mehrere Zielbehälter mit einer Pumpe in der zweiten kommunizierenden Verbindung,
die Figur 9: einen Vorrats- und mehrere Zielbehälter mit einer Pumpe in der ersten kommunizierenden Verbindung und
die Figur 10: einen Vorratsbehälter und mehrere Zielbehälter in der Aufsicht mit ringförmigen Formstücken zur Medienverteilung und zum Luftaustausch.

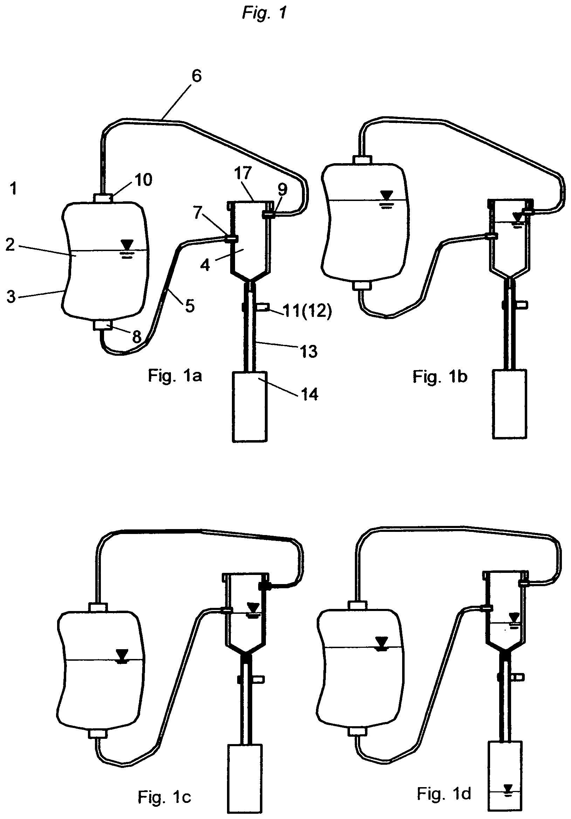

Figur 1a zeigt eine bevorzugte Ausführungsform der Vorrichtung **1**. Die abzufüllenden Medien **2** werden bevorzugt in einem aus Folie gefertigten, flexiblen Vorratsbehälter **3**, d. h. in einem Beutel, bereitgestellt, der mit dem Maßbehälter **4** über die erste und zweite kommunizierende Verbindung **5** und **6** zu einer sterilen Einheit verbunden ist. Derartige Beutel sind als Behälter für Infusionslösungen (z. B. Infusions- oder Blutkonservenbeutel) bekannt. Hierbei kann auch der Maßbehälter **4** ein aus Folie gefertigter, flexibler Beutel sein. In einer weiteren bevorzugten Ausführungsform sind der Vorratsbehälter **3** und/oder der Maßbehälter **4** formbeständige Einweg- oder Mehrwegbehälter aus einem nicht-flexiblen Material (z. B. Kunststoff, Glas, Metall).

Die untere, das Maß definierende Öffnung **7** des Maßbehälters **4** ist über die erste Verbindung **5** mit der unteren Öffnung **8** des Vorratsbehälters verbunden, die in kommunizierender Verbindung mit den abzufüllenden Medien **2** steht. Die obere Öffnung **9** des Maßbehälters **4** fungiert als Luftaustritt und führt über die zweite Verbindung **6** vom oberen Teil des Maßbehälters zur oberen Öffnung **10** des Vorratsbehälters **3**, welche oberhalb der abzufüllenden Medien **2** im Vorratsbehälter **3** liegt. Dieser obere Teil des Vorratsbehälters **3** ist mit Luft gefüllt.
Ferner weist der Maßbehälter **4** einen absperrbaren Auslauf **11** auf, der tiefer liegt als die untere Öffnung **7.** Der Maßbehälter **4** ist über die erste und zweite Verbindung **5** und **6** nach außen dicht und in steriler Weise mit dem Vorratsbehälter **3** verbunden.

In einer bevorzugten Ausführungsform der Erfindung sind die Verbindungen **5** und **6** Schläuche.
Die Verbindung **6** zwischen der oberen Öffnung **9** und der oberen Öffnung **10** des Vorrats- und Maßbehälters kann entfallen, wenn die obere Öffnung **9** als Luftaustritt mit einem sterilen, für die Medien undurchlässigen Gasfilter bzw. einem Belüftungsventil versehen ist, der bzw. das den Luftaustausch mit der umgebenden Umwelt ermöglicht, aber keine Keime und Partikel eindringen lässt.

Durch Mittel zur Krafteinwirkung auf die abzufüllenden Medien **2,** bevorzugt zur Druckdifferenzerzeugung zwischen Vorrats- und Maßbehälter **3** und **4**, ist pro Füllvorgang ein vorgegebenes Volumen an Medien **2** zwischen Vorrats- und Maßbehälter **3** und **4** kommunizierbar. Der Transfer der abzufüllenden Medien vom Vorratsbehälter **3** in den Maßbehälter **4** ist hierbei über die erste Verbindung **5** möglich, bis mindestens die untere Öffnung **7** des Maßbehälters **4** von den abzufüllenden Medien bedeckt ist. Bei von den abzufüllenden Medien bedeckter, unterer Öffnung **7** sind die abzufüllenden Medien **2** aus dem Maßbehälter **4** in den Vorratsbehälter **3** so lange transferierbar, bis die untere Öffnung **7** zumindest teilweise nicht mehr von den abzufüllenden Medien bedeckt ist.
Das vorgegebene Volumen an abzufüllenden Medien ist geometrisch bestimmt durch den Raum zwischen der unteren Öffnung **7** des Maßbehälters **4** und dem absperrbaren Auslauf **11**.

Gemäß Figur 1a ist der absperrbare Auslauf **11** das steuerbare Auslaufventil **12**. In einer bevorzugten Ausführungsform ist das steuerbare Auslaufventil **12** ein Schlauchquetschventil. Dieses drückt reversibel den Querschnitt der nach außen dichten, sterilen Verbindung **13** zwischen dem Maß- und dem Zielbehälter **4** und **14** fluiddicht zusammen. Bevorzugt ist die Verbindung **13** ein flexibler Schlauch. Bei Öffnung des Schlauchquetschventils ist das vorgegebene Volumen an Medien **2** im Maßbehälter **4** ohne Kontakt zur umgebenden Umwelt in den Zielbehälter **14** abfüllbar. Analog zu Vorrats- und Maßbehälter **3** und **4** kann der Zielbehälter **14** aus einem flexiblen Einwegmaterial oder aus einem nicht flexiblen, formbeständigen Mehrwegmaterial bestehen.
Die Medien gelangen nach Öffnen des Auslaufventils **12** vom Maßbehälter **4** auf einem fluiddichten, sterilen Weg in den Zielbehälter **14.**
Nach dem Ende des Füllvorganges ist der Zielbehälter **14** durch mechanische und/oder thermische und/oder chemische Einwirkung (z. B. Klammern, Schweißen, Verkleben) auf den Schlauch **(13)** verschließbar. Der Zielbehälter **14** ist steril von dem Maßbehälter **4** durch Durchtrennen (z. B. Schneiden) des Verschlusses abtrennbar, der durch vorherige Einwirkung auf den Schlauch **13** erzeugt worden ist.

Die Figuren 1a bis 1d zeigen den Ablauf des erfindungsgemäßen Verfahrens:
Figur 1a zeigt den Ausgangszustand der Vorrichtung vor Durchführen von Schritt A). Der Vorratsbehälter **3** enthält die abzufüllenden Medien **2** und Luft. Der Maßbehälter **4** ist leer. Dieser Zustand des Maßbehälters **4** entspricht dem Endzustand der Vorrichtung **1**, nachdem das vorgegebene Volumen aus dem Maßbehälter **4** in den Zielbehälter **14** überführt worden ist.

Figur 1b zeigt das Füllen des Maßbehälters **4** nach Anheben des einen Beutel darstellenden Vorratsbehälters **3,** soweit und solange, bis die untere Öffnung **7** des Maßbehälters **4** von den abzufüllenden Medien **2** bedeckt ist.
Über die einen Schlauch darstellende, erste Verbindung **5** fließen die abzufüllenden Medien aus dem Vorratsbehälter **3** in den Maßbehälter **4**, wobei der Medienspiegel im Vorratsbehälter **3** oberhalb der unteren Öffnung **7** des Maßbehälters **4** liegt. Die Luft tritt aus dem Maßbehälter **4** über die einen Schlauch darstellende, zweite Verbindung **6** in den Vorratsbehälter **3** ein. Das absperrbare Auslauf **11** in Form des Schlauchquetschventils **12** ist geschlossen. Der Medienspiegel im Maßbehälter **4** steigt über die untere Öffnung **7**.

Wenn die Medien in dem Maßbehälter **4** oberhalb der unteren Öffnung **7** stehen, wird der Vorratsbehälter **3** gesenkt, so dass der Spiegel der abzufüllenden Medien im Vorratsbehälter **3** tiefer liegt als die untere Öffnung **7** des Maßbehälters **4**. In dieser Lage laufen die abzufüllenden Medien **2** über die untere Öffnung **7** über die Verbindung **5** zurück in den Vorratsbehälter **3.** Aus dem Vorratsbehälter **3** gelangt über die zweite Verbindung **6** Luft in den Maßbehälter **4.** Die Flüssigkeit aus dem Maßbehälter **4** läuft zurück in den Vorratsbehälter **3**, bis die untere Öffnung **7** zumindest teilweise frei liegt und über diese keine abzufüllenden Medien mehr aus dem Maßbehälter gesaugt werden können.

Figur **1c** zeigt diesen Zustand nach Durchlaufen der Schritte A) und B). Der Maßbehälter **4** enthält nach Figur 1c ein durch die geometrischen Verhältnisse des Maßbehälters bestimmtes, vorgegebenes Volumen, welches durch den Raum zwischen der Oberkante der unteren Öffnung **7** des Maßbehälters **4** und dem absperrbaren Auslauf **11** gegeben ist.

Figur 1d zeigt die sterile Überführung der abzufüllenden Medien **2** vom Maßbehälter **4** in den mindestens einen Zielbehälter **14** nach Durchlaufen von Schritt C) und während des Ablaufs von Schritt D). Wenn der Druck des steuerbaren Auslaufventils 12 auf den die sterile Verbindung **13** darstellenden, bevorzugt thermoplastischen Schlauch sehr klein wird, wird die Absperrung des Schlauches aufgehoben und die abzufüllenden Medien fließen aus dem Maßbehälter **4** über den Schlauch in den Zielbehälter **14** ab. Der Zielbehälter **14** wird nachfolgend durch Schweißen des thermoplastischen Schlauches, bevorzugt mit einer Blutbeutelzange, steril vom Maßbehälter **4** getrennt.

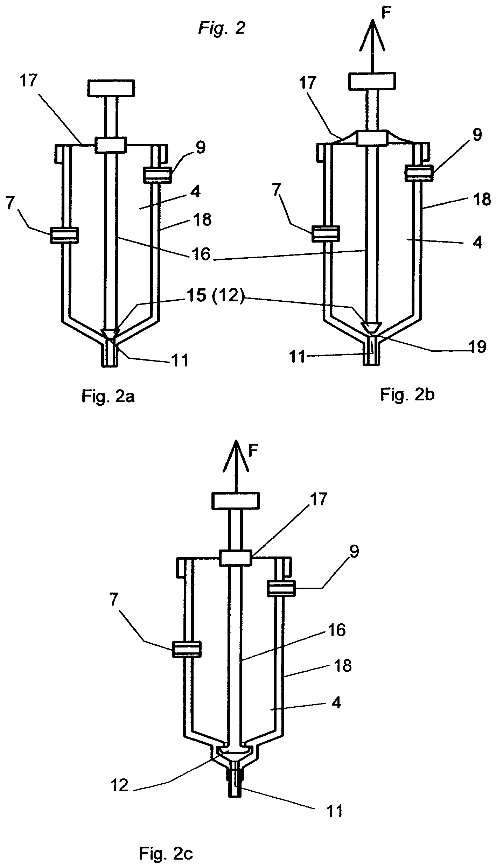

Figur 2a zeigt eine bevorzugte Ausführungsform der erfindungsgemäßen Vorrichtung, bei welcher der Auslauf **11** im Boden des Maßbehälters **4** durch ein steuerbares Auslaufventil **12** im Maßbehälter **4** absperrbar ist. Der absperrbare Auslauf **11** des Maßbehälters ist von einem Stempel **15** verschlossen. Eine Stempelstange **16** führt durch einen Deckel **17** des Maßbehälters **4** dicht nach außen. Der Deckel ist bevorzugt flexibel oder das Oberteil des Maßbehälters **4** ist durch eine ziehharmonikaartige Ausbildung (Faltenbalg) in Richtung der Stempelstange **16** verformbar (nicht gezeigt). Die Auslegung ist in erster Linie bestimmt durch die Länge der Stempelstange **16** derart, dass der Stempel **15** durch die Elastizität des Deckels **17** oder der Wandung **18** auf den absperrbaren Auslauf **11** gedrückt wird und diesen dicht verschließt.

Wird gemäß Figur 2b auf den Teil der Stempelstange **16**, der sich außerhalb des Maßbehälters **4** befindet, eine Zugkraft F auf den Rand des Deckels **17** ausgeübt, entfernt sich der Stempel **15** vom absperrbaren Auslauf **11**, es bildet sich ein Auslaufspalt **19** und die abzufüllenden Medien treten über den absperrbaren Auslauf **11** aus dem Maßbehälter **4**.

Figur 2c zeigt eine Ausführung, bei der im geschlossenen Zustand des absperrbaren Auslaufs **11** in der Stempelstange **16** eine Zugkraft F herrscht.
Durch einen Druck auf das außen liegende Teil der Stempelstange ist der Deckel des Maßbehälters **4** verformbar. Somit wird die Zugkraft zur Druckkraft und das steuerbare Auslaufventil **12** öffnet sich.

Bei den Ausführungsformen der Figuren 2a-c ergibt sich das vorgegebene Volumen an abzufüllenden Medien **2** aus dem Raum zwischen der Oberkante der unteren Öffnung **7** und dem absperrbarem Auslauf **11** im Boden des Maßbehälters **4**. Das vorgegebene Volumen an abzufüllenden Medien ist nach Ventilöffnung in den Zielbehälter **14** überführbar. Der Zielbehälter **14** ist nach Ende des Füllvorganges wie bereits oben beschrieben durch Quetschschweißen der nach außen dichten, schlauchförmigen Verbindung **13** vom Maßbehälter **4** abtrennbar.

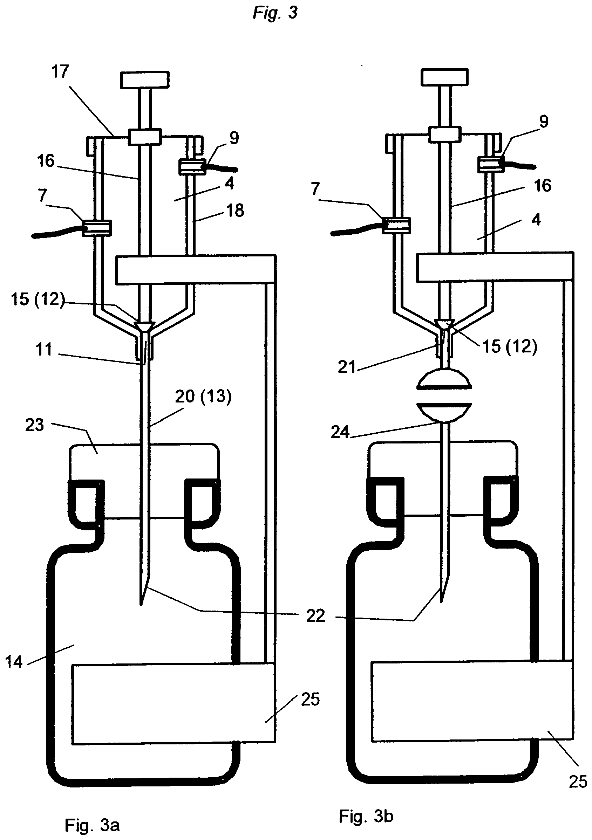

Figur 3a stellt einen Maßbehälter dar, welcher mit einem Zielbehälter **14** steril und fluiddicht verbunden ist.
Die sterile Verbindung **13**, die den Maßbehälter **4** mit dem Zielbehälter **14** steril verbindet, ist ein Röhrchen **20**, dessen stumpfe Öffnung **21** im Boden des Maßbehälters **4** durch einen Stempel **15** verschlossen ist. Die Spitze des Röhrchens **22** ist in den Zielbehälters **14** steril einführbar. Bevorzugt ist das Röhrchen **20** durch einen ein Septum darstellenden Deckel **23** in den Zielbehälter **14** einführbar. Durch Zugkraft auf die Stempelstange **16** gemäß Figur 2b wird die stumpfe Öffnung **21** freigelegt und die Medien sind in den Zielbehälter **14** überführbar. Gemäß Figur 3b ist nach Ende des Füllvorganges der Zielbehälter **14** steril vom Maßbehälter **4** durch Abdrücken und/oder durch versiegelndes Durchschneiden des Röhrchens **20** trennbar. Hierbei ist ein steriler Verschluß **24** für den Zielbehälter **14** generierbar. Alternativ ist ein steriler Verschluß des Zielbehälters **14** durch Herausziehen des Röhrchens **20** aus dem ein Septum darstellenden Deckel **23** erzeugbar. Zur Stabilisierung sind Maß- und Zielbehälter durch die Klammer **25** fixiert. In einer bevorzugten Ausführungsform stellt das Röhrchen **20** eine Nadel aus Kunststoff oder Metall dar.

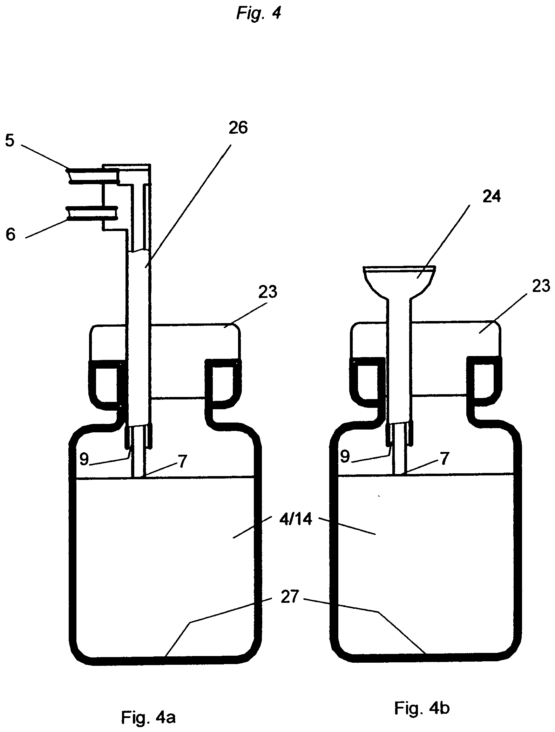

Figur 4a zeigt eine weitere bevorzugte Ausführungsform der erfindungsgemäßen Vorrichtung **1**, bei welcher Maß- und Zielbehälter identisch sind und bei welcher die untere Öffnung **7** und die obere Öffnung **9** in eine Doppelleitung integriert sind. Die Doppelleitung ist steril durch einen, bevorzugt ein Septum darstellenden Deckel **23** in den Zielbehälter **14** einführbar, besonders bevorzugt bei der Fertigung des Deckels **23** und vor der Sterilisierung der Vorrichtung **1.** Öffnung **7** ist ein Röhrchen, über welches die abzufüllenden Medien **2** über die erste Verbindung **5** mit dem Vorratsbehälter **3** austauschbar sind. Öffnung **9** ist ein Röhrchen, über welches Luft über die zweite Verbindung **6** mit dem Vorratsbehälter **3** austauschbar ist. Das Röhrchen mit geringerer lichter Weite (innere Leitung), das Öffnung **7** ist, befindet sich koaxial in dem Röhrchen mit größerer lichter Weite, das Öffnung **9** ist. Das Röhrchen mit größerer lichter Weite stellt die äußere Leitung der Doppelleitung dar, welche durch den Raum zwischen der Außenwand der inneren Leitung und der Innenwand der äußeren Leitung gebildet ist.
Innere und äußere Leitung sind außerhalb des Maßbehälters **4** Bestandteile von Formstücken **26**, an denen die Schläuche darstellenden Verbindungen **5** und **6** befestigt sind (z. B. durch Ankleben).
Das Röhrchen mit geringerer lichter Weite weist einen geringeren Abstand zum Boden **27** des Maßbehälters **4** auf als das Röhrchen mit größerer lichter Weite. Das vorgegebene Volumen an abzufüllenden Medien ist gleich dem Raum zwischen der Spitze des Röhrchens, das Öffnung **7** ist, und dem Boden **27** des Maßbehälters **4**.

Fig. 4b stellt diese bevorzugte Ausführungsform nach Ende eines Füllvorganges dar. Die bevorzugt aus Plastik gefertigten, besonders bevorzugt thermoplastischen Teile der Formstücke **26** außerhalb des Maßbehälters **4** sind durch Abschweißen und Durchtrennen, z. B. mit einer Schweißzange, in einen sterilen Verschluß **24** überführbar.

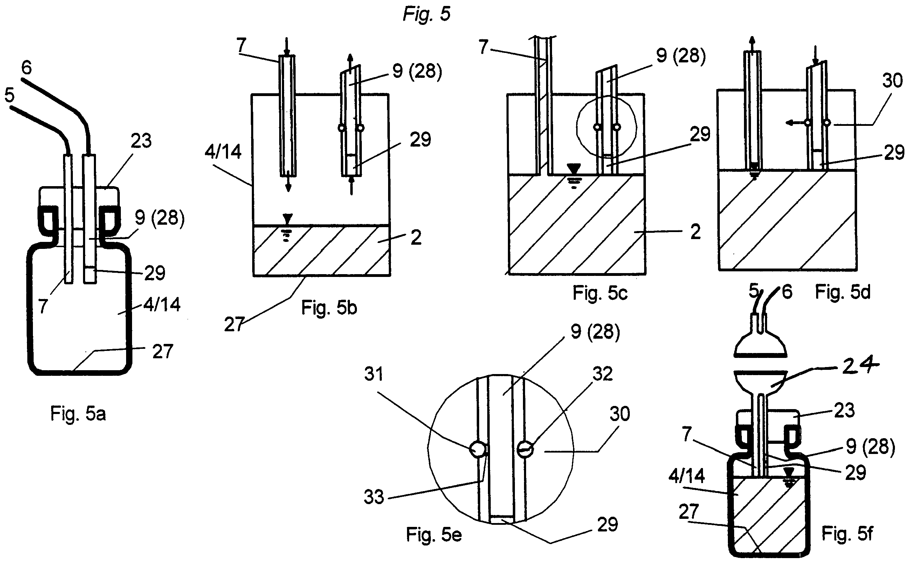

Nach Figur 5a werden die Röhrchen, die Öffnung **7** und **9** sind, separat durch den Deckel **23** in den Maßbehälter **4** eingeführt. Besonders bevorzugt sind die Röhrchen mit dem Deckel des Zielgefäßes in einem Stück gefertigt oder sind durch den ein Septum darstellenden Deckel **23** vor der Sterilisierung einführbar.
Figur 5a stellt eine Ausführungsform der Vorrichtung **1** dar, bei welcher die obere Öffnung **9** ein Röhrchen **28** darstellt, welches ein poröses, gasdurchlässiges, aber für die abzufüllenden Medien undurchlässiges Material **29** aufweist. Dieses gasdurchlässige Material ist bevorzugt eine hydrophobe Gasfiltermembran, besonders bevorzugt eine Teflonmembran. Der Maßbehälter **4** hat wie bei Figur 4 gleichzeitig die Funktion des Zielbehälters **14**.
Nach Figur 5b werden über die gleichfalls ein Röhrchen darstellende, untere Öffnung **7** die abzufüllenden Medien **2** in den Zielbehälter **14** überführt. Gleichzeitig verläßt die aus dem Zielbehälter **14** verdrängte Luft über das gasdurchlässige Material **29** das Röhrchen **28**. Erreicht der Spiegel der abzufüllenden Medien **2** im Zielbehälter **14** gemäß Figur 5c den unteren, das poröse, gasdurchlässige Material **29** enthaltenden Teil des Röhrchens **28**, wird dieses Material **29** durch die Medien **2** benetzt und für Gas undurchlässig. Die Benetzung blockiert den weiteren Luftaustausch über die obere Öffnung **9** und verfälscht die Gesamtvolumenbilanz durch in der unteren Öffnung **7** stehende Medien **2**. Weil keine Luft mehr aus dem Zielbehälter abführbar ist, sind auch keine Medien **2** mehr in den Zielbehälter **14** überführbar.
In der zweiten Verbindung **6** wird ein Gasdruck erzeugt, wobei das Gas aus dem oberen Teil des Vorratsbehälters **3** stammt. Da durch den von den Medien benetzten Gasfilter **29** kein Gas hindurchtreten kann, öffnet sich durch die Gasdruckerzeugung gemäß Figur 5d ein Rückschlagventil **30** und durch dieses tritt Gas in den Zielbehälter **14**, wodurch die Medien aus der ersten Verbindung **5** solange in Richtung Vorratsbehälter befördert werden, bis der Medienspiegel im Zielbehälter **14** das untere Ende der Öffnung 7 erreicht. Dann tritt Luft durch die abzufüllenden Medien im Zielbehälter **14** und die Rückförderung und der Abfüllvorgang sind beendet. Nach Figur 5e besteht das Rückschlagventil **30** aus einem elastischen Ring **31,** der in einer Rille **32** um das Röhrchen **28** herum liegt und unter dem eine kleine Bohrung **33** vom Boden der Rille in das Innere des Röhrchens führt. Ist der Druck im Inneren des Röhrchens größer als außerhalb des Röhrchens, tritt Luft durch die Bohrung **33** unter dem Ring **31** nach außen. Das Rückschlagventil **30** befindet sich bevorzugt in dem Teil des Röhrchens **28**, der sich im Zielbehälter befindet.

Anstelle eines Rückschlagventils **30** ist bevorzugt oberhalb des gasdurchlässigen Materials **29** eine durch Laserschuß in den zielbehälterseitigen Teil des Röhrchens **28** eingebrachte kapillarförmige Bohrung oder Drossel (nicht gezeigt) vorgesehen.
Die kapillarförmige Bohrung oder Drossel hat die Funktion, dass bei Benetzen des hydrophoben Filters durch die in den Zielbehälter **14** eintretenden Medien 2 der Zufluss der Medien nicht völlig abgebrochen, sondern nur stark verlangsamt wird. Mit dem Einleiten des Rückförderns steigt der Luftdruck in der zweiten Verbindung 6 und durch die kapillarförmige Bohrung tritt Luft in den Zielbehälter, die das überschüssige Volumen an Medien zurückführt und letztlich auch die erste Verbindung **5** leert.

Das vorgegebene Volumen im Zielbehälter ist bestimmt durch dessen Geometrie, bevorzugt durch den Raum zwischen dem unteren Teil des gasdurchlässigen Materials **29** und dem Boden **27** des Zielbehälters **14**.
Die vorstehenden beiden Lösungen haben den Vorteil, dass der Füllprozess und der Grad der Füllung nicht überwacht werden müssen und daß der Füllprozeß mit hoher Präzision ohne Verluste an abzufüllenden Medien in der unteren Öffnung **7** bzw. ersten Verbindung **5** möglich ist.

Der Zielbehälter wird bevorzugt durch Quetschschweißen der beiden Röhrchen **7** und **9** zu einem sterilen Verschluß **24** verschlossen wie in Figur 5f gezeigt.

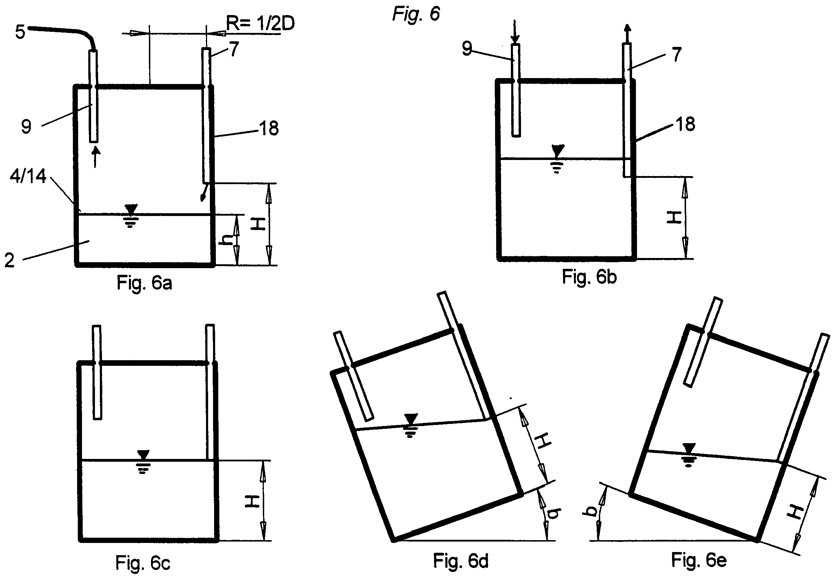

Figur 6a zeigt einen Zielbehälter **14**, welcher gleichzeitig Maßbehälter ist, mit der ersten und zweiten Verbindung **5** und **6** während des Füllvorganges. Hierbei stellen die oberen und unteren Öffnungen **9** und **7** jeweils Röhrchen dar, wobei sich die untere Öffnung **7** benachbart zur Wandung **18** des Zielbehälters **14** befindet.
Figur 6b stellt den Zielbehälter im überfüllten Zustand dar. Bei Erreichen dieses Zustandes wird die Rückförderung der abzufüllenden Medien **2** in den Vorratsbehälter **3** eingeleitet. Die Rückförderung erfolgt durch Druckerzeugung in der oberen Öffnung **9** oder durch Unterdruckerzeugung in der unteren Öffnung **7**. Gegenüber Figur 6a kehrt sich die Fließrichtung in der ersten Verbindung **5** um.
In Figur 6c ist die Rückförderung soweit abgelaufen, bis die untere Öffnung **7** frei liegt und Luft durchtritt, welche die Rückförderung abbricht.
Figur 6d stellt einen Zielbehälter **14**, welcher gleichzeitig Maßbehälter ist, im gekippten Zustand dar. Der Kippwinkel ist b, der im Gegenuhrzeigersinn positiv zu zählen ist. Bei einem positiven Kippwinkel b, wie in Figur 6d gezeigt, ergibt sich im Vergleich zu Figur 6c, bei der der Kippwinkel b des Maßbehälters gleich Null ist, ein um ein Zusatzvolumen ΔV größeres, vorgegebenes Volumen. Bei Figur 6e erfolgt das Kippen in der anderen Richtung, b ist negativ. Es ergibt sich ein um ein Zusatzvolumen ΔV kleineres, vorgegebenes Volumen als beim Kippwinkel b = 0 ° in Figur 6c.
Bei einem Zielbehälterdurchmesser D beträgt das Zusatzvolumen ΔV = π/8 D³ tan b. Bei einem Zielbehälterdurchmesser von D = 15 mm und einem Kippwinkel b von ±30 ° ist das Volumen absolut um ca. +0,77 ml veränderbar. Der relative Abgleichbereich hängt vom Gesamtvolumen ab. Es ist ΔV/V = (π/8 D³ tan b) / (π/4 D² H) = ½ D/H tan b.

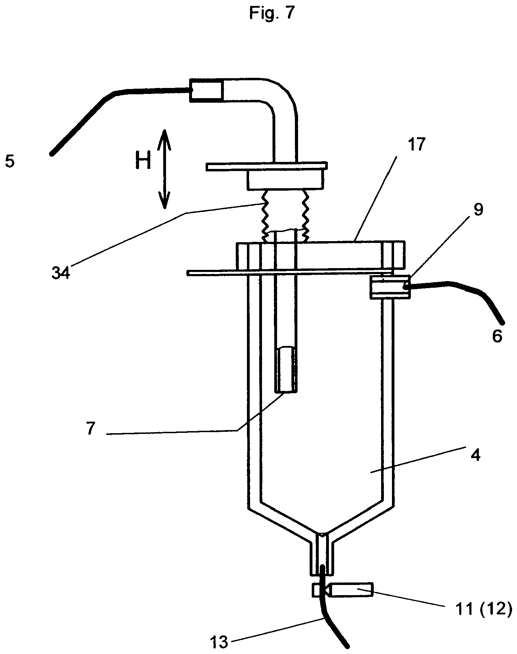

Figur 7 zeigt eine Ausführungsform der erfindungsgemäßen Vorrichtung **1**, bei der das vorgegebene Volumen durch Veränderung der Höhe H der unteren Öffnung **7** in dem Maßbehälter **4** variierbar ist. Die Durchführung der Verbindung **5** durch den Deckel **17** des Maßbehälters **4** ist hier durch einen Faltenbalg **34**, der eine lineare Bewegung zulässt, abgedichtet. Eine äußere mechanische Verstelleinrichtung (nicht dargestellt) erlaubt es, den Abstand der unteren Öffnung **7** zum absperrbaren Auslauf **11** zu verändern. Ist der Maßbehälterdurchmesser innen gleich dᵢ, ändert sich das vorgegebene Volumen mit der Höhe H um Π/4 * dᵢ² * H. Dieser lineare Zusammenhang erlaubt es, die mechanische Verstelleinrichtung mit einem Wegmesssystem zu versehen und über dieses das vorgegebene Volumen genau einzustellen.

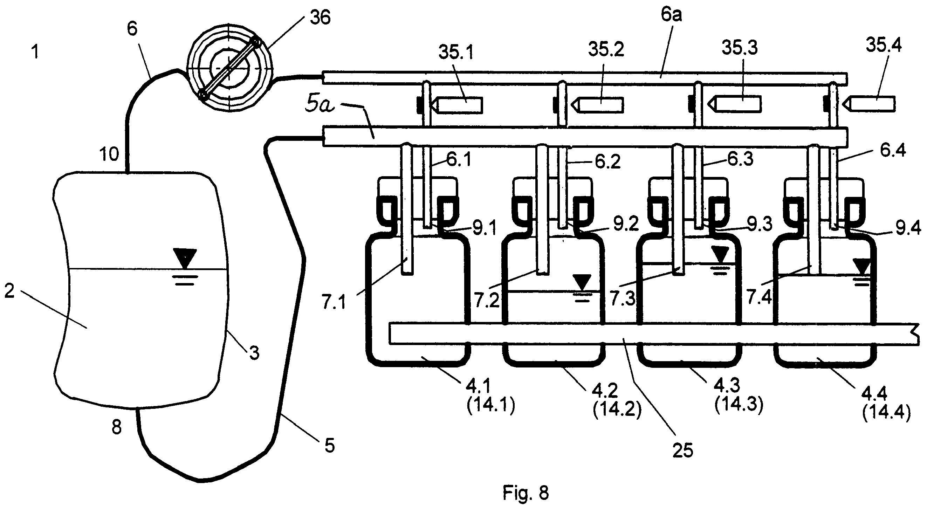

Figur 8 zeigt eine erfindungsgemäße Vorrichtung **1** zur sterilen Befüllung mehrerer Zielbehälter in Weiterentwicklung von Figur 4. Auch bei dieser Ausführungsform hat der Zielbehälter **14** gleichzeitig die Funktion eines Maßbehälters. Nach Figur 8 sind vier Zielbehälter **14.1-4** dargestellt, grundsätzlich ist die Zahl der zu füllenden Zielbehälter nicht beschränkt.

Die abzufüllende Medien **2** befinden sich in einem flexiblen Vorratsbehälter **3**. Alle unteren Öffnungen **7.1-4** der Maß- und gleichzeitig Zielbehälter **4.1-4** bzw. **14.1-4** sind mit einer ersten Sammelleitung **5a** verbunden. Die Sammelleitung **5a,** welche bevorzugt ein Plastikformstück ist, ist über die einen Schlauch darstellende Verbindung **5** mit der unteren Öffnung **8** des beutelförmigen Vorratsbehälters **3** und damit mit den abzufüllenden Medien verbunden.

Zum Füllen wird beispielsweise der Vorratsbehälter **3** soweit angehoben, dass die Medien durch die erste kommunizierende Verbindung **5** in die zu füllenden Zielbehälter **14.1-4** fließen. Die oberen Öffnungen/Luftaustritte **9.1-4** der Maß- und gleichzeitig Zielbehälter **4.1-4** bzw. **14.1-4** sind ebenfalls in einer zweiten Sammelleitung **6a** zusammengeführt, welche bevorzugt ein Plastikformstück ist. Die Sammelleitung **6a** verbindet die einen Schlauch darstellende, zweite Verbindung **6** mit der oberen Öffnung **10** des Vorratsbehälters **3** und so mit dem Luftraum im Vorratsbehälter. Die Luft aus den Zielbehältern **14.1-4** tritt beim Füllvorgang über die Sammelleitung **6a** und die Verbindung **6** wieder in den Vorratsbehälter **3** ein. Die gesamte Vorrichtung **1** ist geschlossen, es gibt keine Unterbrechung der Sterilitätsgrenze.

Sind die Medien in den Zielbehältern so hoch gestiegen, dass die unteren Öffnungen **7.1-4** alle mit Medien überdeckt sind, wird der Vorratsbehälter **3** gesenkt, bis der Medienspiegel im Vorratsbehälter **3** tiefer liegt als die unteren Öffnungen **7.1-4** der Zielbehälter **14.1-4.** Dann laufen die oberhalb der unteren Öffnungen **7.1-4** in den Zielbehältern stehenden Medien wieder in den Vorratsbehälter **3** zurück.

Wenn allerdings bei einem der Zielbehälter **14.1-4** die untere Öffnung **7** durch den absinkenden Medienspiegel zumindest teilweise nicht mehr von den abzufüllenden Medien bedeckt ist, wirkt keine antreibende Kraft mehr auf die übrigen Zielbehälter, weil Luft in die Verbindung **6** kommt, die sich von dem betreffenden Zielbehälter **14** in Richtung Vorratsbehälter **3** bewegt. Deshalb sind in die einzelnen oberen Öffnungen **9.1-4** der Zielbehälter Ventile **35.1-4** eingefügt. Bis auf das Ventil **35** an dem abzugleichenden Zielbehälter **14** sind alle weiteren Ventile in den Luftleitungen **6.1-4** der Zielgefäße geschlossen. Auf den abzugleichenden Zielbehälter **14** wirkt in dieser Abgleichphase eine Pumpe **36**, vorzugsweise eine Schlauchpumpe lokalisiert in der zweiten Verbindung **6**, ein. Die Einwirkung der Pumpe **36** erfolgt nur über das geöffnete Ventil **35** in Verbindung zum abzugleichenden Zielbehälter **14**. Zum Abgleich des vorgegebenen Volumens in dem Zielbehälter **14** fördert die Pumpe **36** Luft aus dem Vorratsbehälter **3** in den Zielbehälter **14**. Die in den abzugleichenden Zielbehälter **14** gedrückte Luft fördert nun die über der unteren Öffnung **7** stehenden Medien durch die erste Sammelleitung **5a** in den Vorratsbehälter **3**, bis die untere Öffnung **7** frei liegt und sich eine direkte Verbindung zwischen unterer und oberer Öffnung **7** und **9** ergibt, wodurch wegen aussetzender Druckeinwirkung die Förderung beendet ist. Damit ist auch der Abgleich beendet. Es kann nur noch Luft auf dem Weg der Verbindung **6**, der oberen Öffnung **9**, des einen geöffneten Ventils **35**, der unteren Öffnung **7** und der Verbindung **5** in den Vorratsbehälters **3** gefördert werden, die die Medien **2** im Vorratsbehälter **3** durchperlt und wieder in den Luftraum des Vorratsbehälters **3** gelangt. Ist der Abgleich eines zu füllenden Zielbehälters **14** beendet, wird dessen zugehöriges Ventil **35** geschlossen und der Abgleich an dem nächsten Zielbehälter durch Öffnung des korrespondierenden Ventils **35** fortgesetzt.
Gemäß Figur 8 befinden sich die dargestellten, zu füllenden Zielbehälter **14.1-4** in folgenden Zuständen:
**14.1** noch nicht gefüllt, **14.2** noch nicht vollständig gefüllt bei geöffnetem Ventil **35.2**, **14.3** in der Abgleichphase, das zugehörige Ventil **35.3** ist geöffnet. Die Pumpe **36** fördert Luft in den Zielbehälter **14.3** und drückt die Medien heraus, bis die untere Öffnung **7.3** frei liegt, **14.4** gefüllt und abgeglichen.

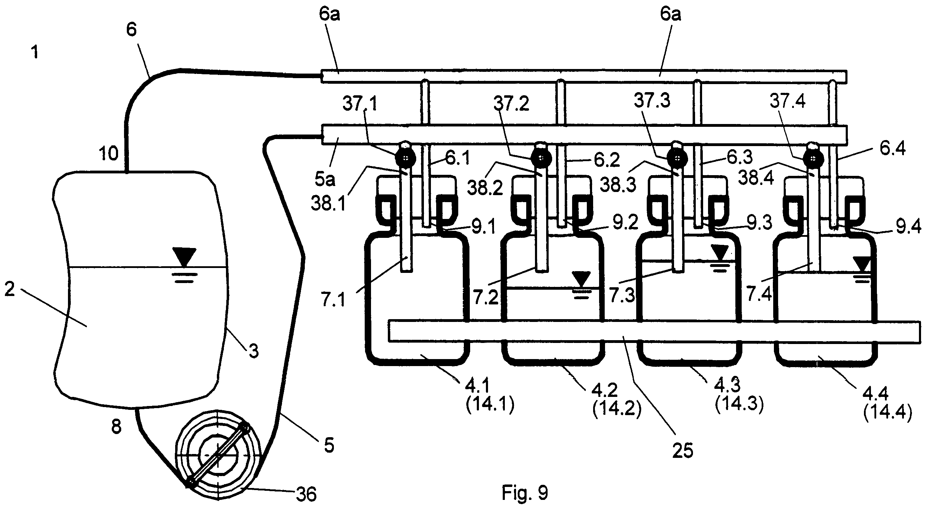

Figur 9 zeigt eine weitere, besonders bevorzugte Ausführungsform der Vorrichtung **1** mit mehreren, hier vier Zielbehältern **14.1-4.** Eine für den Abgleich einzusetzende reversierbare Pumpe **36,** bevorzugt eine die Medien nicht berührende Schlauchpumpe, ist in der ersten Verbindung **5** plaziert. In dieser Ausführung sind Ventile **37.1-4**, die auf die Zulaufleitungen **38.1-4** jedes Maß- und gleichzeitig Zielbehälters **4.1-4** bzw. **14.1-4** wirken, einsetzbar. Der Füllvorgang läuft so ab, dass nur das Ventil in Verbindung mit der unteren Öffnung 7 des zu füllenden Zielbehälters **14** geöffnet wird. Die Pumpe **36** fördert dann die Medien **2** aus dem Vorratsbehälter **3** in den Zielbehälter **14**, bis die untere Öffnung 7 des Zielbehälters **14** von den abzufüllenden Medien bedeckt ist. Dann wird die Pumprichtung umgeschaltet und die Pumpe **36** saugt wieder Medien aus dem Zielbehälter **14** ab. Das Absaugen erfolgt nur solange, bis die untere Öffnung **7** frei liegt. Ist diese frei, sind der Absaug- und der Dosiervorgang beendet. Das Ventil **37.1** in der Zulaufleitung **38.1** wird wieder geschlossen und nach Öffnen des Ventils **37.2** in der Zulaufleitung **38.2** des nächsten Zielbehälters **14.2** wird dieser dann gefüllt.

Gemäß Figur 9 befinden sich die Zielbehälter **14.1-4** in folgenden Zuständen: **14.1** noch nicht gefüllt, Ventil **37.1** geschlossen, **14.2** noch nicht vollständig gefüllt, Ventil **37.2** geschlossen, **14.3** in der Abgleichphase, das zugehörige Ventil **37.3** ist geöffnet, die Pumpe **36** saugt Medien aus dem Zielbehälter **14.3**, bis die untere Öffnung **7.3** frei liegt, **14.4** gefüllt und abgeglichen, Ventil **37.4** ist geschlossen.

Das Füllen der Zielbehälter **14** kann, wenn die Verbindung **5** nicht in die Pumpe **36** eingelegt ist, auch durch Heben des Vorratsbehälters erfolgen, d.h. alle Zielbehälter **14.1-4** werden zeitlich parallel gefüllt, bis die unteren Öffnungen **7.1-4** überdeckt sind. Dabei sind alle Ventile **37.1-4** geöffnet. Nach dem Einlegen der Verbindung **5** in die Pumpe **36** erfolgt dann der Abgleich jedes Zielbehälters **14.1-4** einzeln wie für die Abgleichphase beschrieben.
Der sterile Verschluß der gefüllten Zielbehälter **14.1-4** erfolgt bevorzugt wie bei Figur **4** beschrieben.

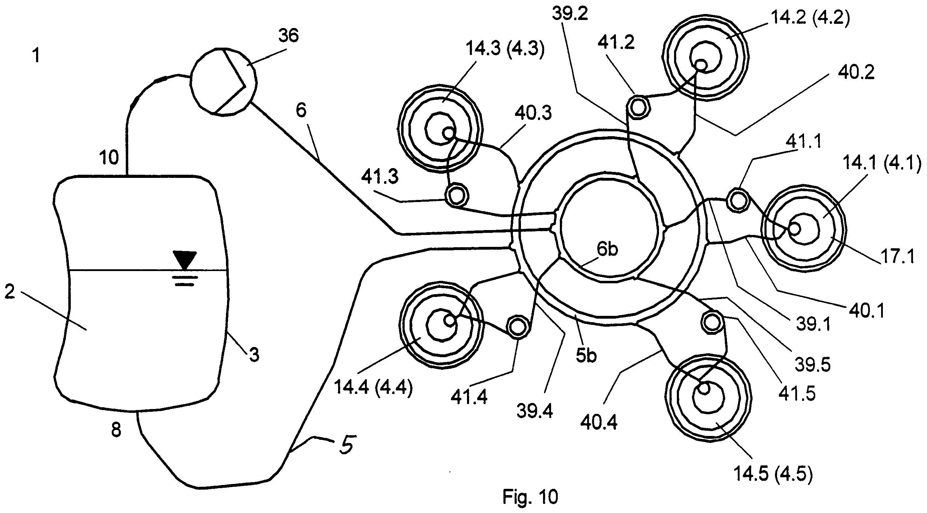

Figur 10 stellt fünf Zielbehälter **14.1-5** in der Aufsicht und einen Vorratsbehälter (Beutel, **3**) dar. Die Zielbehälter sind hier über ringförmige Formstücke **5b** und **6b** untereinander und mit dem Vorratsbehälter **3** verbunden. Von den Formstücken führen Schläuche und/oder Fortsätze **39.1-5** und **40.1-5** zu den Zielbehältern **14.1-5.** In den Fortsätzen **39.1-5,** die als Luftanschlüsse wirken, sind Ventile **41.1-5** angeordnet, die so wirken, dass sie die Fortsätze **39** der Formstücke **6b** reversibel schließen oder freigeben und damit so wirken wie Schlauchquetschventile. Aufbau und Funktion entsprechen im übrigen der Figur **8**. Die Pumpe **36** für den Abgleich des vorgegebenen Volumens wirkt auf die Verbindung **6** ein. Nach dem Füllvorgang werden die gefüllten Zielbehälter **14.1-5**, wie in den Figuren 1 bis **8** gezeigt, abgetrennt oder die Fortsätze aus den Septa herausgezogen.
Die bevorzugten Ausführungsformen nach den Figuren 8, 9 und 10 erlauben die sterile Abfüllung von Medien **2** in beliebig viele Zielbehälter **14.1-n,** die gleichzeitig die Funktion von Maßbehältern **4.1-n** haben.
Bei diesen kostensparenden Ausführungsformen ist die Konstruktion eines absperrbaren Auslaufs **11** im Zielbehälter überflüssig, weil für die Abfüllung der Medien **2** in die Zielbehälter **14.1-n** jeweils eine untere und obere Öffnung **7** bzw. **9** ausreichend sind.

### Bezugszeichenliste

- 1: Vorrichtung
- 2: abzufüllende Medien
- 3: Vorratsbehälter
- 4: Maßbehälter
- 5: erste kommunizierende Verbindung
- 5a: erste Sammelleitung
- 5b: ringförmiges Formstück in Verbindung zur ersten kommunizierenden Verbindung
- 6: zweite kommunizierende Verbindung
- 6a: zweite Sammelleitung
- 6b: ringförmiges Formstück in Verbindung zur zweiten kommunizierenden Verbindung
- 7: untere Öffnung des Maßbehälters
- 8: untere Öffnung des Vorratsbehälters
- 9: obere Öffnung des Maßbehälters
- 10: obere Öffnung des Vorratsbehälters
- 11: absperrbarer Auslauf
- 12: steuerbares Auslaufventil
- 13: sterile Verbindung
- 14: Zielbehälter
- 15: Stempel
- 16: Stempelstange
- 17: Deckel des Maßbehälters
- 18: Wandung
- 19: Auslaufspalt
- 20: Röhrchen
- 21: stumpfe Öffnung des Röhrchens
- 22: Spitze des Röhrchens
- 23: Septumdeckel
- 24: steriler Verschluß
- 25: Klammer
- 26: Formstücke aus thermoplastischem Kunststoff
- 27: Boden des Maß- bzw. Zielbehälters
- 28: Röhrchen
- 29: poröses, gasdurchlässiges Material
- 30: Rückschlagventil
- 31: elastischer Ring
- 32: Rille im Röhrchen 28
- 33: Bohrung in der Rille 32
- 34: Fältenbalg
- 35: Ventil in zweiter Sammelleitung 6a
- 36: Pumpe einwirkend auf die erste und/oder zweite Verbindung 5 bzw. 6
- 37: Ventil in der Zulaufleitung
- 38: Zulaufleitung
- 39: mit dem Formstück 6b verbundener Fortsatz bzw. Schlauch
- 40: mit dem Formstück 5b verbundener Fortsatz bzw. Schlauch
- 41: Ventil in dem Fortsatz bzw. Schlauch 39

## Patentansprüche

1. Vorrichtung (**1**) zum dosierten Abfüllen von Medien wenigstens umfassend:
- mindestens einen Vorratsbehälter (**3**) für die abzufüllenden Medien (**2**) mit einer im unteren Teil des Vorratsbehälters befindlichen, unteren (**8**) und einer im oberen Teil des Vorratsbehälters befindlichen oberen Öffnung (**10**), wobei mindestens die untere Öffnung (**8**) mit dem Vorrat an abzufüllenden Medien (**2**) in kommunizierender Verbindung steht,
- mindestens einen, mit einem absperrbaren Auslauf (**11**) für die abzufüllenden Medien (**2**) versehenen Maßbehälter (**4**), der mit einer oberen Öffnung (**9**) und mit einer dazu weiter unten liegenden, das Maß definierenden, unteren Öffnung (**7**) ausgestattet ist,
- eine erste kommunizierende Verbindung (**5**) zwischen den unteren Öffnungen (8, 7) des mindestens einen Vorrats- und Maßbehälters,
- eine zweite kommunizierende Verbindung (**6**) zwischen den oberen Öffnungen (**10**) und (**9**) des mindestens einen Vorrats- und Maßbehälters oder eine für die abzufüllenden Medien unpassierbare Verbindung der oberen Öffnungen zur Umwelt,
wobei die Vorrichtung gestaltet ist, ein vorgegebenes Volumen der abzufüllenden Medien (**2**), welches dem Raum zwischen der unteren Öffnung (**7**) des mindestens einen Maßbehälters (**4**) und dem absperrbaren Auslauf (**11**) entspricht, über den absperrbaren Auslauf (**11**) in mindestens einen Zielbehälter (**14**) zu überführen, und wobei die Vorrichtung gestaltet ist, das vorgegebene Volumen durch Kippen des Maßbehälters (**4**) um einen im Gegenuhrzeigersinn positiven Kippwinkel zu vergrößern im Vergleich zu dem vorgegebenen Volumen bei einem Kippwinkel von 0 ° und wobei die Vorrichtung gestaltet ist, das vorgegebene Volumen durch Kippen des Maßbehälters (**4**) um einen im Gegenuhrzeigersinn negativen Kippwinkel zu verkleinern im Vergleich zu dem vorgegebenen Volumen bei einem Kippwinkel von 0 °.

2. Vorrichtung (**1**) nach Anspruch 1, wobei die Vorrichtung (**1**) Mittel zur Einwirkung mindestens einer Kraft auf die abzufüllenden Medien (**2**) aufweist, damit diese zwischen dem mindestens einen Vorrats- und Maßbehälter (3, 4) kommunizierbar sind.

3. Vorrichtung (**1**) nach Anspruch 2, wobei die Mittel zur Erzeugung einer Druckdifferenz zwischen Vorrats- und Maßbehälter (3, 4) dienen, damit die abzufüllenden Medien (**2**) zwischen dem mindestens einen Vorrats- und Maßbehälter (3, 4) kommunizierbar sind.

4. Vorrichtung nach Anspruch 2, wobei die Vorrichtung so gestaltet ist, dass die abzufüllenden Medien (**2**) zwischen dem mindestens einen Vorrats- und Maßbehälter (3, 4) kommunizierbar sind durch Mittel zur Einwirkung mindestens einer Kraft auf den Vorratsbehälter (**3**) und/oder auf die mindestens eine, erste Verbindung (**5**) und/oder auf die mindestens eine, zweite Verbindung (**6**).

5. Vorrichtung nach Anspruch **4**, wobei die Vorrichtung so gestaltet ist, dass über die erste Verbindung (**5**) durch die Einwirkung mindestens einer Kraft dem mindestens einen Maßbehälter (**4**) die abzufüllenden Medien (**2**) solange zuführbar sind, bis mindestens die untere Öffnung (**7**) des Maßbehälters (**4**) von den abzufüllenden Medien (**2**) vollständig bedeckt ist und dass über die erste Verbindung (**5**) durch die Einwirkung mindestens einer Kraft die abzufüllenden Medien (**2**) in den mindestens einen Vorratsbehälter (**3**) solange rückführbar sind, bis die untere Öffnung (**7**) des Maßbehälters (**4**) zumindest teilweise nicht mehr von den abzufüllenden Medien (**2**) bedeckt ist und dass keine abzufüllenden Medien (**2**) zwischen dem mindestens einen Vorratsbehälter (**3**) und dem mindestens einen Maßbehälter (**4**) austauschbar sind bei einer nur teilweise von den abzufüllenden Medien (**2**) bedeckten, unteren Öffnung (**7**) des Maßbehälters (**4**).

6. Vorrichtung nach Anspruch 4, wobei die Einwirkung mindestens einer Kraft eine Kompression des mindestens einen Vorratsbehälters (**3**) ist.

7. Vorrichtung nach Anspruch 5, wobei durch Einwirkung mindestens einer Kraft eine Druckdifferenz erzeugbar ist durch Heben des mindestens einen Vorratsbehälters (**3**) und wobei nach erfolgtem Heben der Spiegel der abzufüllenden Medien (**2**) im mindestens einen Vorratsbehälter (**3**) höher als die untere Öffnung (**7**) des mindestens einen Maßbehälters (**4**) liegt.

8. Vorrichtung nach Anspruch 5, wobei durch Einwirkung mindestens einer Kraft eine Druckdifferenz erzeugbar ist durch Senken des mindestens einen Vorratsbehälters (**3**) und wobei nach erfolgtem Senken der Spiegel der abzufüllenden Medien (**2**) im mindestens einen Vorratsbehälter (**3**) tiefer als die untere Öffnung (**7**) des mindestens einen Maßbehälters (**4**) liegt.

9. Vorrichtung nach Anspruch **4**, wobei die Einwirkung mindestens einer Kraft auf die erste (**5**) und/oder zweite Verbindung (**6**) eine Einwirkung einer Schlauch- und/oder Peristaltikpumpe (**36**) auf eine Schlauchverbindung ist.

10. Vorrichtung nach Anspruch 1, wobei der mindestens eine Vorratsbehälter (**3**) und/oder der mindestens eine Maßbehälter (**4**) und/oder der mindestens eine Zielbehälter (**14**) ein flexibler Einwegbehälter ist.

11. Vorrichtung nach Anspruch 1, wobei der Abstand der unteren Öffnung (**7**) zum absperrbaren Auslauf (**11**) und somit der Betrag des vorgegebenen Volumens variabel einstellbar sind durch eine Höhenverstellung der unteren Öffnung (**7**).

12. Vorrichtung nach Anspruch 11, wobei sich die untere Öffnung (**7**) in einer flexiblen Wandung (**18**) des mindestens einen Maßbehälters (**4**) befindet und wobei der Abstand der unteren Öffnung (**7**) zum absperrbaren Auslauf (**11**) durch Einwirkung mindestens einer Kraft variierbar ist.

13. Vorrichtung nach Anspruch 11, wobei die untere Öffnung (**7**) des mindestens einen Maßbehälters (**4**) ein Rohr in einem teilweise als Faltenbalg (**34**) gestalteten Deckel (**17**) des Maßbehälters (**4**) ist und wobei der Abstand der unteren Öffnung (**7**) zum absperrbaren Auslauf (**11**) durch Druckbeaufschlagung des Faltenbalges (**34**) variierbar ist.

14. Vorrichtung nach Anspruch 1, wobei die mindestens eine, erste Verbindung (**5**) zwischen der unteren Öffnung (**7**) des Maßbehälters und der unteren Öffnung (**8**) des Vorratsbehälters eine nach außen dichte Schlauchverbindung ist.

15. Vorrichtung nach Anspruch 1, wobei die mindestens eine, zweite Verbindung (**6**) zwischen der oberen Öffnung (**9**) des Maßbehälters und der oberen Öffnung (**10**) des Vorratsbehälters eine nach außen dichte Schlauchverbindung ist.

16. Vorrichtung nach Anspruch 1, wobei der Maßbehälter (**4**) über eine nach außen dichte Verbindung (**13**) mit dem Zielbehälter (**14**) verbunden ist.

17. Vorrichtung nach einem der Ansprüche 1 bis 16, wobei mehrere Maßbehälter (**4.1**) und/oder Zielbehälter (**14.1**) über mindestens eine erste Verbindung (**5**) aus dem mindestens einen Vorratsbehälter (**3**) sukzessiv mit n abzufüllenden Medien (**2**) befüllbar sind und wobei n eine ganze positive Zahl größer Eins ist.

18. Verfahren zum dosierten Abfüllen von Medien mittels einer Vorrichtung (**1**) nach einem der Ansprüche 1 bis 17 umfassend die Schritte:
A) Erzeugen eines Flusses an abzufüllenden Medien (**2**) aus dem Vorratsbehälter (**3**) in den Maßbehälter (**4**), bis mindestens die untere Öffnung (**7**) des Maßbehälters (**4**) von abzufüllenden Medien (**2**) vollständig bedeckt wird,
B) Erzeugen eines Flusses an abzufüllenden Medien (**2**) aus dem Maßbehälter (**4**) in den Vorratsbehälter (**3**), bis die untere Öffnung (**7**) des Maßbehälters (**4**) zumindest teilweise nicht mehr von abzufüllenden Medien (**2**) bedeckt wird und sich ein vorgegebenes Volumen an abzufüllenden Medien (**2**) im Maßbehälter (**4**) befindet,
C) Öffnen des absperrbaren Auslaufs (**11**) und
D) Überführen des vorgebenen Volumens an abzufüllenden Medien (**2**) aus dem Maßbehälter (**4**) in den mindestens einen Zielbehälter (**14**),
wobei die Schritte A) und B) durch Einwirkung mindestens einer Kraft auf die abzufüllenden Medien (**2**) erfolgen, wobei die Schritte A) - D) in n Zyklen durchgeführt werden und wobei n eine ganze positive Zahl größer gleich Eins ist.

19. Verfahren nach Anspruch 18, wobei nach Schritt D) des n-ten Zyklus die Schlauchverbindung (**13**) zwischen Maß- und Zielbehälter (**4**) und (**14**) durch thermische und/oder mechanische Einwirkung und/oder durch Verklebung den Maßbehälter (**4**) und den Zielbehälter (**14**) verschließend durchtrennt wird.

## Claims

1. Device (1) for metered filling of media, at least comprising:
- at least one storage container (3) for the media (2), which are to be filled, with a lower opening (8) present in the lower part of the storage container and an upper opening (10) present in the upper part of the storage container, wherein at least the lower opening (8) is disposed in communicating connection with the reserve of media (2) to be filled,
- at least one measuring container (4) which is provided with a blockable outlet (11) for the media (2) to be filled and which is furnished with an upper opening (9) and with a lower opening (7) lying further below with respect thereto and defining the quantity,
- a first communicating connection (5) between the lower openings (8, 7) of the at least one storage container and measuring container,
- a second communicating connection (6) between the upper openings (10 and 9) of the at least one storage container and measuring container or a connection, which is impassable by the media to be filled, of the upper openings with the environment,
wherein the device is configured
to transfer a predetermined volume of the media (2), which is to be filled and which corresponds with the space between the lower opening (7) of the at least one measuring container (4) and the blockable outlet (11), by way of the blockable outlet (11) to at least one target container (14),
and wherein the device is configured
to increase the predetermined volume, by tilting the measuring container (4) through a tilt angle which is positive in counter-clockwise sense, by comparison with the predetermined volume at a tilt angle of 0°,
and wherein the device is configured
to reduce the predetermined volume, by tilting the measuring container (4) through a tilt angle which is negative in counter-clockwise sense, by comparison with the predetermined volume at a tilt angle of 0°.

2. Device (1) according to claim 1, wherein the device (1) comprises means for applying at least one force to the media (2) to be filled so that these are communicable between the at least one storage container (3) and measuring container (4).

3. Device (1) according to claim 2, wherein the means serve for producing a pressure difference between storage container (3) and measuring container (4) so that the media (2) to be filled are communicable between the at least one storage container (3) and measuring container (4).

4. Device according to claim 2, wherein the device is so configured that the media (2) to be filled are communicable between the at least one storage container (3) and measuring container (4) by means for applying at least one force to the storage container (3) and/or to the at least one first connection (5) and/or to the at least one second connection (6).

5. Device according to claim 4, wherein the device is so configured that the media (2) to be filled can be supplied to the at least one measuring container (4) via the first connection (5) by the action of at least one force until at least the lower opening (7) of the measuring container (4) is completely covered by the media (2) to be filled and that the media (2) to be filled can be returned to the at least one storage container (3) via the first connection (5) by the action of at least one force until the lower opening (7) of the measuring container (4) at least in part is no longer covered by the media (2) to be filled and that no media (2) to be filled are exchangeable between the at least one storage container (3) and the at least one measuring container (4) if a lower opening (7) of the measuring container (4) is only partly covered by the media (2) to be filled.

6. Device according to claim 4, wherein the action of at least one force is a compression of the at least one storage container (3).

7. Device according to claim 5, wherein through action of at least one force a pressure difference can be generated by lifting the at least one storage container (3) and wherein after lifting has taken place the level of the media (2), which is to be filled, in the at least one storage container (2) is higher than the lower opening (7) of the at least one measuring container (4).

8. Device according to claim 5, wherein through the action of at least one force a pressure difference can be generated by lowering the at least one storage container (3) and wherein after lowering has taken place the level of the media (2), which is to be filled, in the at least one storage container (3) is deeper than the lower opening (7) of the at least one measuring container (4).

9. Device according to claim 4, wherein the action of at least one force on the first connection (5) and/or second connection (6) is an action of a hose pump and/or peristaltic pump (36) on a hose connection.

10. Device according to claim 1, wherein the at least one storage container (3) and/or the at least one measuring container (4) and/or the at least one target container (14) is or each are a flexible single-use container.

11. Device according to claim 1, wherein the spacing of the lower opening (7) from the blockable outlet (11) and thus the amount of the predetermined volume can be set in a variable manner by height adjustment of the lower opening (7).

12. Device according to claim 11, wherein the lower opening (7) is present in a flexible wall (18) of the at least one measuring container (4) and wherein the spacing of the lower opening (7) from the blockable outlet (11) is variable by the action of at least one force.

13. Device according to claim 11, wherein the lower opening (7) of the at least one measuring container (4) is a pipe in a cover (17), which is partly formed as a bellows (34), of the measuring container (4) and wherein the spacing of the lower opening (7) from the blockable outlet (11) is variable by the action of pressure on the bellows (34).

14. Device according to claim 1, wherein the at least one first connection (5) between the lower opening (7) of the measuring container and the lower opening (8) of the storage container is a hose connection sealed to the outside.

15. Device according to claim 1, wherein the at least one second connection (6) between the upper opening (9) of the measuring container and the upper opening (10) of the storage container is a hose connection sealed to the outside.

16. Device according to claim 1, wherein the measuring container (4) is connected with the target container (14) by way of a connection (13) sealed to the outside.

17. Device according to any one of claims 1 to 16, wherein several measuring containers (4.1) and/or target containers (14.1) are fillable successively with n media (2), which are to be filled, by way of at least one first connection (5) from the at least one storage container (3).

18. Method for metered filling of media by means of a device (1) according to any one of claims 1 to 17, comprising the steps of:
A) producing a flow of media (2), which are to be filled, from the storage container (3) to the measuring container (4) until at least the lower opening (7) of the measuring container (4) is completely covered by the media (2) to be filled,
B) producing a flow of media (2), which are to be filled, from the measuring container (4) to the storage container (3) until the lower opening (7) of the measuring container (4) is at least in part no longer covered by media (2) to be filled and a predetermined volume of media (2), which are to be filled, is present in the measuring container (4),
C) opening the blockable outlet (11) and
D) transferring the predetermined volume of media (2), which are to be filled, from the measuring container (4) to the at least one target container (14),
wherein the steps A) and B) are carried out by action of at least one force on the media (2) to be filled, wherein the steps A) to D) are performed in n cycles and wherein n is a whole positive number greater than or equal to one.

19. Method according to claim 18, wherein after step D) of the nth cycle the hose connection (13) between measuring container (4) and target container (14) is separated in closing manner by thermal and/or mechanical action and/or by glueing the measuring container (4) and the target container (14).

## Revendications

1. Dispositif **(1)** d'embouteillage dosé de milieux, comprenant :
- au moins un récipient de stockage **(3)** pour les milieux à embouteiller **(2)** avec une ouverture inférieure **(8)**, située en partie basse du récipient de stockage et une ouverture supérieure **(10)**, située en partie haute du récipient de stockage, dans lequel au moins l'ouverture inférieure **(8)** est en liaison de communication avec le stockage au niveau des milieux à embouteiller **(2)**,
- au moins un récipient de mesure **(4)** prévu avec un orifice de sortie obturable **(11)** pour les milieux à embouteiller **(2)**, qui est équipé d'une ouverture supérieure **(9)** et d'une ouverture inférieure **(7)** située en-dessous de celle-ci et définissant la mesure,
- une première liaison de communication **(5)** entre les ouvertures inférieures **(8, 7)** de l'au moins un récipient de stockage et de l'au moins un récipient de mesure,
- une seconde liaison de communication **(6)** entre les ouvertures supérieures **(10)** et **(9)** de l'au moins un récipient de stockage et de l'au moins un récipient de mesure, ou une liaison des ouvertures supérieures infranchissable vers l'environnement pour les milieux à embouteiller,
dans lequel le dispositif est conçu pour
faire passer un volume prédéfini des milieux à embouteiller **(2)**, qui correspond à l'espace entre l'ouverture inférieure **(7)** de l'au moins un récipient de mesure **(4)** et l'orifice de sortie obturable **(11)**, via l'orifice de sortie obturable **(11)**, dans au moins un récipient cible **(14)**,
et dans lequel le dispositif est conçu pour
augmenter, par inclinaison du récipient de mesure **(4)** selon un angle d'inclinaison positif dans le sens contra-horaire, le volume prédéfini par rapport au volume prédéfini à un angle d'inclinaison de 0°,
et dans lequel le dispositif est conçu pour
réduire, par inclinaison du récipient de mesure **(4)** selon un angle d'inclinaison négatif dans le sens contra-horaire, le volume prédéfini par rapport au volume prédéfini à un angle d'inclinaison de 0°.

2. Dispositif **(1)** selon la revendication 1, dans lequel le dispositif **(1)** présente des moyens pour exercer au moins une force sur les milieux à embouteiller **(2)**, de sorte que ceux-ci peuvent être communiqués entre l'au moins un récipient de stockage **(3)** et l'au moins un récipient de mesure **(4)**.

3. Dispositif **(1)** selon la revendication 2, dans lequel les moyens servent à produire une différence de pression entre le récipient de stockage **(3)** et le récipient de mesure **(4)**, pour que les milieux à embouteiller **(2)** puissent être communiqués entre l'au moins un récipient de stockage **(3)** et l'au moins un récipient de mesure **(4)**.

4. Dispositif selon la revendication 2, dans lequel le dispositif est conçu de sorte que les milieux à embouteiller (2) peuvent être communiqués entre l'au moins un récipient de stockage **(3)** et l'au moins un récipient de mesure **(4)** par des moyens permettant d'exercer au moins une force sur le récipient de stockage **(3)** et/ou sur l'au moins une première liaison **(5)** et/ou sur l'au moins une seconde liaison **(6).**

5. Dispositif selon la revendication 4, dans lequel le dispositif est conçu de sorte que les milieux à embouteiller **(2)** peuvent être alimentés à l'au moins un récipient de mesure **(4)** via la première liaison **(5)** par l'exercice d'au moins une force, jusqu'à ce que au moins l'ouverture inférieure **(7)** du récipient de mesure **(4)** soit totalement recouverte par les milieux à embouteiller **(2)** et de sorte que les milieux à embouteiller **(2)** peuvent être renvoyés dans l'au moins un récipient de stockage **(3)** via la première liaison **(5)** par l'exercice d'au moins une force, jusqu'à ce que l'ouverture inférieure **(7)** du récipient de mesure **(4)** ne soit au moins partiellement plus recouverte par les milieux à embouteiller (2) et de sorte qu'aucun milieu à embouteiller **(2)** ne peut être échangé entre l'au moins un récipient de stockage **(3)** et l'au moins un récipient de mesure **(4)** lorsqu'une ouverture inférieure (7) du récipient de mesure **(4)** n'est recouverte que partiellement par les milieux à embouteiller **(2)** .

6. Dispositif selon la revendication 4, dans lequel l'exercice d'au moins une force est une compression de l'au moins un récipient de stockage **(3).**

7. Dispositif selon la revendication 5, dans lequel une différence de pression peut être produite par l'exercice d'au moins une force en levant l'au moins un récipient de stockage **(3)** et dans lequel, une fois ce levage effectué avec succès, le niveau des milieux à embouteiller **(2)** dans l'au moins un récipient de stockage **(3)** est supérieur à l'ouverture inférieure **(7)** de l'au moins un récipient de mesure **(4)**.

8. Dispositif selon la revendication 5, dans lequel une différence de pression peut être produite par l'exercice d'au moins une force en abaissant l'au moins un récipient de stockage **(3)** et dans lequel, une fois cet abaissement effectué avec succès, le niveau des milieux à embouteiller **(2)** dans l'au moins un récipient de stockage **(3)** est inférieur à l'ouverture inférieure **(7)** de l'au moins un récipient de mesure **(4)**.

9. Dispositif selon la revendication 4, dans lequel l'exercice d'au moins une force sur la première liaison **(5)** et/ou sur la seconde liaison **(6)** est l'exercice d'une pompe à tuyau et/ou d'une pompe péristaltique **(36)** sur une liaison par tuyau.

10. Dispositif selon la revendication 1, dans lequel l'au moins un récipient de stockage **(3)** et/ou l'au moins un récipient de mesure **(4)** et/ou l'au moins un récipient cible **(14)** est un récipient jetable flexible.

11. Dispositif selon la revendication 1, dans lequel l'éloignement de l'ouverture inférieure **(7)** par rapport à l'orifice de sortie obturable **(11)**, et par conséquent la quantité du volume prédéfini, peuvent être ajustés de façon variable par réglage en hauteur de l'ouverture inférieure **(7)**.

12. Dispositif selon la revendication 11, dans lequel l'ouverture inférieure **(7)** est située dans une paroi flexible **(18)** de l'au moins un récipient de mesure **(4)** et dans lequel l'éloignement de l'ouverture inférieure **(7)** par rapport à l'orifice de sortie obturable **(11)** peut être varié par l'exercice d'au moins une force.

13. Dispositif selon la revendication 11, dans lequel l'ouverture inférieure **(7)** de l'au moins un récipient de mesure **(4)** est un tuyau dans un capot **(17)** du récipient de mesure **(4)** partiellement conçu sous forme de soufflet **(34)** et dans lequel l'éloignement de l'ouverture inférieure **(7)** par rapport à l'orifice de sortie obturable **(11)** peut être varié par exercice d'une pression sur le soufflet **(34)**.

14. Dispositif selon la revendication 1, dans lequel l'au moins une première liaison **(5)** entre l'ouverture inférieure **(7)** du récipient de mesure et l'ouverture inférieure **(8)** du récipient de stockage est une liaison par tuyau étanche vers l'extérieur.

15. Dispositif selon la revendication 1, dans lequel l'au moins une seconde liaison **(6)** entre l'ouverture supérieure **(9)** du récipient de mesure et l'ouverture supérieure **(10)** du récipient de stockage est une liaison par tuyau étanche vers l'extérieur.

16. Dispositif selon la revendication 1, dans lequel le récipient de mesure **(4)** est relié au récipient cible **(14)** via une liaison **(13)** étanche vers l'extérieur.

17. Dispositif selon l'une quelconque des Revendications 1 à 16, dans lequel plusieurs récipients de mesure **(4.1)** et/ou récipients cibles **(14.1)** peuvent être remplis successivement avec n milieux à embouteiller **(2)** via au moins une première liaison **(5)** depuis l'au moins un récipient de stockage **(3)** et dans lequel n est un nombre entier positif supérieur à un.

18. Procédé d'embouteillage dosé de milieux au moyen d'un dispositif **(1)** selon l'une quelconque des revendications 1 à 17, comprenant les étapes consistant à :
A) produire un flux au niveau des milieux à embouteiller **(2)** depuis le récipient de stockage **(3)** vers le récipient de mesure **(4)** jusqu'à ce qu'au moins l'ouverture inférieure **(7)** du récipient de mesure **(4)** soit totalement recouverte par les milieux à embouteiller **(2)**,
B)produire un flux au niveau des milieux à embouteiller **(2)** depuis le récipient de mesure **(4)** vers le récipient de stockage **(3)** jusqu'à ce que l'ouverture inférieure **(7)** du récipient de mesure **(4)** ne soit au moins partiellement plus recouverte par les milieux à embouteiller **(2)** et qu'un volume prédéfini de milieux à embouteiller **(2)** se trouve dans le récipient de mesure **(4),**
C)ouvrir l'orifice de sortie obturable **(11)** et
D) faire passer le volume prédéfini de milieux à embouteiller **(2)** du récipient de mesure **(4)** à l'au moins un récipient cible **(14)**,
dans lequel les étapes A) et B) sont effectuées par l'exercice d'au moins une force sur les milieux à embouteiller **(2)**,
dans lequel les étapes A) à D) sont réalisées en n cycles,
et dans lequel n est un nombre entier positif supérieur ou égal à un.

19. Procédé selon la revendication 18,
dans lequel, après l'étape D) du n-ième cycle, la liaison par tuyau **(13)** entre le récipient de mesure **(4)** et le récipient cible **(14)** est fermée hermétiquement par action thermique et/ou mécanique et/ou par encollage du récipient de mesure **(4)** et du récipient cible **(14)**.
